# EUROPEAN PATENT SPECIFICATION

(11) **EP 2 627 586 B1**
(45) Date of publication and mention of the grant of the patent: **20.09.2017**
(21) Application number: 10766027.6
(22) Date of filing: 11.10.2010
(51) Int. Cl.: B65D 83/08, A47K 10/42, B23B 3/26, B23B 3/28, B65D 75/58, B32B 3/02, B32B 3/26, B32B 3/28

(54) **STACK OF TISSUE PAPER AND DISTRIBUTOR THEREFOR**
STAPEL PAPIERTÜCHER UND SPENDER DAFÜR
PILE DE PAPIER ABSORBANT ET DISTRIBUTEUR

(43) Date of publication of application: 21.08.2013
(73) Proprietor: SCA Hygiene Products AB, 405 03 Göteborg (SE)
(72) Inventor: SCHMIDT, Marcel, 81929 München (DE); WONG, Andrew, 200050 Shanghai (CN); ENGLER, Bertold, 72213 Altensteig (DE); VAN KRIEKEN, Bram, 80469 München (DE)
(74) Representative: Hoffmann Eitle
(86) International application number: PCT/EP2010/065194
(87) International publication number: WO 2012/048725

(56) References cited:
- EP-A1- 1 195 333
- EP-A1- 1 201 564
- EP-A1- 1 213 230
- EP-A1- 1 308 401
- EP-A1- 1 336 576
- EP-A2- 0 983 740
- DE-A1-102007 035 501
- GB-A- 1 051 417

## Description

### Field of the Invention

The present disclosure is concerned with tissue paper dispensing systems, packaging for tissue paper sheets and interfolding arrangements for tissue paper sheets. The present disclosure is concerned with absorbent tissue paper sheets of all kinds, including toilet tissue paper sheets/hygiene paper sheets/non-woven absorbent sheets, facial tissue paper sheets, kitchen paper towel type tissue paper sheets, hand towel type paper sheets, paper napkins, moist wipes, etc.

### Background to the Invention

Various types of tissue paper packages are known in the art. There is toilet tissue paper, which is generally provided as a roll of tissue paper. The toilet tissue paper is in the form of a continuous web of tissue paper divided into sheets, each about the length of a hand (but smaller and larger sheets are also known), by a perforation line across the web. The web of toilet tissue paper is wrapped about a tubular core. Kitchen tissue paper for wiping up kitchen spills is often also provided in the form of a roll of tissue. It is also known to provide toilet tissue paper as a stack, rather than as a roll. The sheets of toilet paper are interfolded so that as one sheet is pulled out, the next sheet comes with it to protrude partly through a dispensing opening of a holding wall mounted dispenser holding the stack. The stack may be wrapped in a thin paper that has to be removed before the dispenser is loaded. Coreless toilet tissue paper stacks are also known, which are discussed below.

There is also known facial tissue paper, which may be provided as a stack of interfolded tissue paper sheets. A box containing the tissue paper stack has a dispensing opening through which the facial tissue paper sheets can be withdrawn, one-by-one. Interfolding the tissue paper sheets allows the withdrawal of a succeeding sheet to partly pull out a preceding sheet. A partly pulled out sheet thus sticks out from the dispensing opening for ease of grabbing and withdrawing. The box is disposable in that it is made of biodegradable materials such as cardboard.

Also, reference may be made to Fig. 6 of published application EP 1 213 230 A1, which discloses stacking a plurality of single-folded sheets 80 combined with each other. Each sheet 80 is folded at a folding line 81 to form an upper piece 82 and a lower piece 83. Furthermore, reference may be made to Fig. 1 of published application EP 1 195 333 A1, which discloses providing a stack of folded sheets that overlap.

The present inventors have noted a flaw in a tissue roll design in terms of hygiene. A roll of tissue paper generally has to be handled by both hands in separating a sheet or sheets from a roll. This means that a prior user has handled the tissue that a next user uses. From a hygiene perspective, this is sub-optimal, especially in the context of toilet tissue paper. There is also a problem in that rolls of tissue paper can not be transported and stored in a perfect stack. That is, the tubular core of the roll and poorly nested rolls mean that space is wasted that could otherwise be taken up by tissue paper.

Facial tissue paper boxes and toilet tissue paper stacks are in some ways a more hygienic option than tissue paper rolls. The boxes provide a relatively closed structure, whereby access is only given to the uppermost sheet in the stack in the box, which is the sheet that the user uses him/her-self. There is, however, room for improvement in present tissue paper packages. They are normally designed so that a cut-out formed by perforations is torn away to reveal the dispensing opening. A more intuitive, less fiddly way to open a tissue paper package is desirable. Also, dispensing tissue from a conventional tissue paper box is usually a two handed process. One hand holding the box down and the other hand pulling a tissue paper sheet out. One handed tissue paper dispensing is preferable.

A stack of toilet tissue paper sheets may be provided for dispensing from a permanent dispenser. Refill packs of toilet tissue paper sheets are provided to fill the dispenser. Paper towel dispensers are also known in the art. Such towels may be designed for hand or face drying. These can be provided in the form of wall mountable containers that are loaded with a stack of paper towels or toilet tissue paper sheets. To load, the paper towels or toilet tissue paper sheets are removed from a wrapping, which may be plastic or paper, and loaded into the container. One design of a container for paper towels has, at a bottom end, a slit aligned with a longitudinal axis of the paper towels so that the towels can be withdrawn from the container, one at a time. The container and paper towel stack are commonly configured such that a paper towel is tugged in a direction of a transverse axis of the paper towel to pull it from the container. The present inventors have noted that the short axis of the paper towel is thus presented to the user, which often then gets rotated so that a long axis of the towel is aligned with a long axis of the face. One design of the toilet tissue dispenser and stack of toilet paper tissue has interfolded sheets so that as a sheet is withdrawn from the dispenser, it partially pulls the next sheet to be dispensed with it through the slit for ease of grasping the next sheet. Interfolded toilet tissue dispensers have not taken off in the domestic context, although they are used in business or away from home environments. One reason for this is perhaps because the bulk of toilet tissue dispensers make them unsuitable for domestic use. Perhaps another reason for this is that the dispensers are not easy to load. Another reason for it may be that the present designs of the dispenser do not fit with what people expect or want in a domestic environment.

As with the stack form toilet tissue paper dispenser mentioned above, it should be apparent that improvements can be made to make the loading and use process of the container or dispenser closer to a one-step operation. Likewise, the tissue loading and dispensing process could be more ergonomically friendly.

Accordingly, it is an object of the present invention, in its various aspects, and preferred embodiments to address the above issues and provide an improved stack of interfolded tissue paper sheets, and a container comprising the stack.

### Summary of the Invention

The present invention provides a stack of interfolded tissue paper sheets comprising the features of claim 1, and a container comprising the features of claim 5. Preferred embodiments are defined in the dependent claims.

In one aspect of the present disclosure, there is provided a package comprising a stack of absorbent tissue paper sheets, wherein the package comprises at least one line of weakness that has an unbroken configuration and a broken configuration and wherein the package is configured to be able to be flexed to pull apart the line of weakness when the line of weakness is in the broken configuration to open the package to allow a sheet in the stack to be withdrawn through the open package.

Preferably, the stack of tissues is elongate and the opened package reveals a longitudinally central region of the stack of tissues, while the longitudinal ends of the stack remain covered by the package. Preferably, the package and the line of weakness are configured so that the line of weakness is broken by flexing the package.

A package so designed provides an intuitive, even satisfying, way of opening it to get at the sheets. For a package to be configured in this way, it needs be able to be flexed without strain for most adults, including the elderly and young adults. There is a certain feeling of gratification in cracking open a package in this way.

In an alternative of the package above, the line of weakness defines, at least partly, a tear away strip that is configured to be pulled in a direction of extension of the line of weakness to break the line of weakness. The tear off strip could be implemented by way of a pair of spaced apart lines of weakness with a protrudabte pull tab at one end of the tear off strip, whereby the pull tab is pullable in the direction of extension of the pair of lines of weakness to break the at least one line of weakness so that the package can be opened.

Preferably, the package is sized so as to be grasped by the full hands of a user in order for the flexure to be carried out. That is, the package is sized so that the palm (at least partly), the fingers and the thumb of one hand fit about the package (such that the package fills the hand) on one side of the line of weakness and the palm, the fingers and the thumb of the other hand fit about the package on the other side of the line of weakness (such that the package fills the hand). The hands can be manipulated so as to flex the package and thereby break open the line of weakness. The package is sized so as to be suitable for being opened in the manner. In practice, a user may prefer to apply the counter rotational forces using one hand at one side of the line of weakness and using a work surface, for example, as a counter resistance. Other single-handed ways of breaking the line of weakness can be imagined by the skilled person.

The package is elongate. The at least one line of weakness may be placed in a central region and extend across the longitude of the package. The at least one line of weakness may, in fact, be at least one lateral line that is centrally positioned with respect to a longitudinal direction of the package. Opposing longitudinal end regions of the package can thus be grasped and a turning force can be applied by the user about a pivot point provided by the line of weakness. In this way, the line of weakness is provided at an optimal line of pivot about which the package can be flexed to reduce the force required to open the package. If the line of weakness was longitudinally extending, then opposing lateral sides of the line of weakness would need to be grasped, which would make it harder to create the required flexure because of the increased turning force.

Preferably, the package is configured to be flexed about a hinge portion of the package, which serves to keep the package together when the line of weakness has been broken open. That is, the line of weakness may extend about the package such that a hinge portion of the package remains when the line of weakness is broken open. The line of weakness may encompass three of four sides (other than end faces of the package) about the package, with at least part of the fourth side serving as the hinge portion of the package. Put another way, the line of weakness extends about a majority of a lateral periphery of the elongate package so that the minor part of the package that is not encompassed by the line of weakness serves as a hinge portion keeping opposing parts of the package together and allowing the package to open about the hinge portion.

The package is preferably openable about a hinge portion on one face of the package to provide a dispensing opening on an opposing face of the package.

Preferably, the package is configured to be flexed from a closed and sealed configuration to an opened configuration in breaking the line of weakness. Preferably, the package can be manipulated back to its closed configuration, whereby opposing sides of the broken line of weakness are in contact. This manipulation is preferably done by rotating the package about the hinge portion.

The package is preferably stiff enough to maintain the open configuration even when the package is oriented so that the weight of the tissues presses against the hinge portion. Such a package enables the package to serve as a counter top tissue paper dispenser. Put another way, the package is stiff enough that when empty it at least substantially retains the shape it has when it is full. The package may be made of cardboard, paper or plastic. Preferably, the package is made of a biodegradable material.

In a second aspect of the present disclosure, there is provided a package comprising a stack of absorbent tissue paper sheets, wherein the package is openable, from a closed configuration concealing the tissues, by moving one part of the package relative to another part of the package, and wherein a cover is moveable with one of the parts relative to the other part so as to cover a portion of the sheets, yet leave uncovered a portion of the sheets to thereby allow a sheet to be withdrawn from the package.

Preferably, the first aspect of the present disclosure and the second aspect of the present disclosure are combined, whereby the package is configured such that respective parts of the package move apart from one another when the line of weakness is broken and the package is opened and a cover is provided to move with one of the parts relative to the other to cover a portion of the sheets when the package is in an opened configuration and to leave a portion of the sheets uncovered to allow access to the tissues to withdraw a sheet from the package.

A stack of sheets can be described as having a top sheet providing a top of the stack, a bottom sheet providing a bottom of the stack and a number of sheets stacked between the top and bottom sheets providing sides of the stack connecting the top and bottom of the stack. The cover is preferably configured to cover a side of the stack of sheets when the package is in the opened configuration.

Preferably, the cover is see-through enough to reveal when the number of sheets left in the stack has reached a depleted state. That is, once there are less than a predetermined number of sheets left in the stack, the user can see this depleted state through the cover by observing the position of the last sheet in the stack.

Preferably, the cover is combined with the package described above whereby the package has a hinge portion and the package is openable and closable by rotation about the hinge portion. Rotation of the package about the hinge is such as to provide a dispensing opening in the package through which a first sheet in the stack (closest to the dispensing opening in a sheet withdrawal sequence of the stack) is revealed and can be withdrawn, where the top sheet is on an opposing side of the stack to the hinge, and also to provide a side opening through which the stack is revealed in a thickness direction (or stacking direction). The side opening becomes more spread apart from the hinge end to the dispensing opening end. Preferably, the cover is configured to cover the side opening. Preferably, the cover is substantially correspondingly shaped to the side opening. Yet more preferably, the side opening is a triangle shape, with an apex thereof extending to the hinge portion. A base of the triangle at the dispensing opening may be curved or straight.

Preferably, in the closed configuration, preferably the closed configuration with the line of weakness as yet unbroken, the cover is inside the package. Preferably, the cover is attached to one side of the line of weakness, preferably an inside surface of a wall of the package on one side of the line of weakness, and extends to the other side of the line of weakness in a cantilevered fashion.

Preferably, the cover is attached to one part of the package and is configured to slide with respect the other part of the package as the parts move relative to one another in opening the package. That is, in the closed configuration of the package, the cover overlaps with the other part of the package and moves into a less or non-overlapping state as the package opens.

In an aspect of the present invention, there is provided a container for containing the stack of interfolded absorbent tissue paper sheets according to the present invention, the container comprising a dispensing opening for withdrawing a sheet of the stack through the dispensing opening, wherein the dispensing opening can have overlapping lips in a direction of withdrawal of the sheet, the lips configured to be opened into a less overlapping or non-overlapping state as the sheet moves therethrough and to return to an overlapping state after withdrawal of the sheet.

The container may be a package comprising the stack of sheets according to the present invention as defined in the foregoing. The container is able to resist tissues undesirably falling out of the dispensing opening when they are not being withdrawn. In particular, the container may be mounted so that the weight of the stack is directed to the dispensing opening. Despite the weight pressing on the opening, the lips are able to prevent the sheets slipping out of the dispensing opening. This is because the lips have to be quite substantially deflected from an overlapping state in order for any tissues to pass. This is to be compared to known dispensing opening in tissue paper boxes, whereby a film is spread across the dispensing opening and has a slit in it. Although the slit does have a tendency to resist sheets slipping out of the dispensing opening unintentionally, it does not require as great an amount of deflection as overlapping lips as in the container of the present invention.

In the tissue withdrawal direction, one of the lips is more forward than the other. Preferably, the lips are configured such that they alternate which of the lips is the more forward lip for each sheet that is dispensed.

Preferably, the overlapping lips are shaped to provide an opening through which a sheet adjacent the dispensing opening can be grasped without having to move the lips. That is, the opening provides a direct path for a user's fingers to the sheets, which is useful when first loading the sheets to pull a first sheet through the lips and the dispensing opening. Preferably, the dispensing opening is elongate and the opening is centrally located between opposing longitudinal ends of the dispensing opening. Preferably, the lips are shaped to provide the opening, whereby the sheet is able to be drawn therethrough free from contact from the overlapping lips on opposing faces of the tissue and, whereby on opposing sides of the opening in a direction perpendicular to the sheet withdrawal direction along a face of the tissue, the overlapping lips contact opposing faces of the sheet as it is pulled therethrough. Preferably, the dispensing opening is elongate and the overlapping lips are configured to contact opposing faces of the tissue as it is pulled therethrough and are located at opposing longitudinal end portions of the dispensing opening and the opening defined by the overlapping lips is centrally located between the opposing longitudinal end portions.

The sheet withdrawal direction is used frequently in this specification. It is a direction normal to the plane of the sheets in the stack. It passes centrally through the dispensing opening of a package, container or dispenser. The dispensing opening is defined by terminating walls about its periphery. The plane in which these walls terminate provides another plane to which the tissue withdrawal direction extends normally.

In the case of a package comprising a stack of absorbent tissue paper sheets, the sheets in the stack are interfolded and the package comprises a dispensing opening so that as a succeeding sheet is withdrawn from the package through the dispensing opening, a preceding sheet is partially pulled out with it and so that once the succeeding sheet is fully withdrawn through the dispensing opening, the succeeding sheet parts with the preceding sheet, which sticks out from the dispensing opening, yet remains as a leading sheet in the stack.

The sheets are interfolded in an interfolding pattern whereby each sheet is folded once so as to comprise a leading panel and a trailing panel, and whereby for any given sheet in the stack, the leading and trailing panels have a trailing panel of a next sheet and a leading panel of a previous sheet disposed between panels of the given tissue in face to face relation.

Preferably, the interfolding pattern of the stack of sheets and the overlapping lips are configured such that as a leading panel of a sheet closest to the dispensing opening is pulled upon to withdraw the sheet, the leading panel moves through the dispensing opening and the overlapping lips, thereby deforming the lips in a withdrawal direction, and further wherein as the leading panel is pulled, a trailing panel is in face to face relation with a leading panel of an adjacent sheet preceding in the stack so that it pulls the leading panel of the preceding sheet through the overlapping lips and the dispensing opening with it, and wherein once a trailing edge of the trailing panel of the succeeding sheet is released by the overlapping lips, and is thereby out of the dispending opening, the succeeding sheet is released and the leading panel of the preceding sheet protrudes past the overlapping lips for being pulled upon to withdraw the next sheet through the dispensing opening.

The overlapping lips and the interfolding pattern of the stack of tissue paper sheets are preferably configured such that a first one of the lips is more distal to the stack of sheets than a second one of the lips and such that as a sheet is pulled through the dispensing opening and through the overlapping lips, the overlapping lips deform in the withdrawing direction, and the first sheet is in partial face to face relation with a preceding sheet in the stack so that it pulls the preceding sheet with it, and wherein the preceding sheet comes out adjacent the second one of the lips with the succeeding sheet disposed between the preceding sheet and the first one of the lips, and such that as a trailing edge of the succeeding sheet is pulled beyond the overlapping lips, the succeeding sheet is released from the container and the first one of the lips resiliently drops back in the withdrawing direction so as to be behind the second one of the lips.

Thus, the interfolding pattern is such that the tissues are dispensed in an alternating manner between first and second sheet withdrawal configurations. In the first sheet withdrawal configuration, a succeeding sheet is located adjacent a first one of the overlapping lips as compared to a preceding sheet that is pulled through the lips with it, as a result of tissue face to tissue face contact, which is located adjacent a second one of the lips (in the sheet withdrawing direction). In the second sheet withdrawal configuration, the succeeding sheet is located adjacent the second lip and the preceding sheet is located adjacent the first lip. Alternation between the sheet withdrawal configurations between each successively withdrawn sheet results in the overlapping lips alternating between first and second lip configurations. The first lip configuration has the first lip more forward in the sheet withdrawal direction than the second lip and occurs as a result of a sheet being withdrawn under the second sheet withdrawal configuration. The second lip configurations has the second lip more forward in the sheet withdrawal direction than the first lip and occurs as a result of a sheet being withdrawn under the first sheet withdrawal configuration.

In a third aspect of the present disclosure, there is provided a dispenser for holding a stack of absorbent tissue paper sheets or a package comprising the stack of absorbent tissue paper sheets according to the present invention, wherein the dispenser defines a dispensing opening and a cavity for receiving said stack or said package, wherein the dispenser defines the cavity to follow a path including a v shape whereby an outside edge of a peak of the v shape extends into the dispensing opening such that when the stack or package is inserted into the cavity, and the stack or package is sized to fill the cavity, it must be deformed to have the v or u shape to fit therein.

The third aspect of the present disclosure aims the stack toward the dispensing opening and requires the stack to be deformed into a bent v shape. This provides a bias so that the sheets protrude from the dispensing opening for convenient tissue sheet withdrawal. An outside edge of a v shape is to be understood in the context of the legs of the v shape defining a relatively narrow angle between them on an inside and defining a relatively large angle between them on an outside. The v shape may be curved at its peak, rather than pointed.

Looked at in another way, the third aspect of the present disclosure provides a dispenser for holding the stack of absorbent tissue paper sheets according to the present invention or for holding a package comprising the stack of absorbent tissue paper sheets according to the present invention, wherein the dispenser comprises first and second walls, the first wall being made at least partly up of first and second wall parts that are angled toward one another to define a point of intersection and the second wall being made at least partly up of first and second wall parts that are angled toward one another in the same way as the first wall part but to define a dispensing opening therebetween where the point of intersection is positioned in the first wall part, the dispensing opening allowing sheets from the stack to be withdrawn, the first and second walls being spaced apart to provide a stack receiving cavity therebetween, wherein a line bisecting the angle between the first and second wall parts of the first and second walls passes through the point of intersection of the first wall and the dispensing opening of second wall.

Preferably, a first line bisecting the angle between the first and second parts of the first and second walls extends through the point of intersection of the first wall and the dispensing opening defined by the second wall. Preferably, a line perpendicular to the first line will pass through a first point on the second wall and a second point on the second wall (preferably equally spaced from the dispensing opening). The point of intersection and the first and second points thus provide a three point load tending to fold or flex the stack toward the dispensing opening.

Preferably, the first and second walls are shaped and spaced apart to define a v shaped cavity therebetween such that when the stack or at least one package is inserted into the cavity it must be shaped to have the v shape to fit therein.

It is envisaged that the package of tissue paper sheets and the cavity may be sized such that the package fills the cavity. It is also envisaged that the cavity may be oversized so that a partially depleted and a full package fills the cavity or so that a plurality, e.g. two packages may be required to fill the cavity. In this way, the dispenser can be tapped-up without requiring the current package being used dispensing to first be removed.

Preferably, the dispenser includes opposed top and bottom walls defining a thickness of the v shape of the cavity between them, wherein one of the walls defines an inside edge of the v shape and provides an inside peak of the v shape and the other of the opposing walls defines an outside edge of the v shape of the cavity and defines the dispensing opening located where an outside edge of the peak of v shape would otherwise be. The thickness of the v shape of the cavity determines the number of tissues in the stack that can be received therein.

Preferably, the dispenser includes opposed sidewalls extending between the top and bottom walls to together define a periphery of the cavity.

Preferably, the dispenser defines legs of the v shape of the cavity to have an angle of between 170° and 100°, 160° and 110° or 120° or 130° or 140° and is preferably about 150°. It has been found that angles such as these are optimal for providing a bias for the sheet to protrude through the dispensing opening, without being so steep as to cause the tissue to unintentionally fall through the dispensing opening under the weight of gravity (particularly as the tissue stack becomes depleted).

Preferably, the dispenser defines the cavity to be elongate for receiving an elongate stack of tissue paper sheets or elongate package comprising a stack of tissue paper sheets, to have a thickness direction with which the stacking direction of the stack of tissue paper sheets is to be aligned and a lateral direction across a face of the stack of tissue paper sheets. The dispenser defines the peak of the v shape of the cavity at a central location between opposed longitudinal ends of the cavity so as to require, when the stack of sheets is sized to fill the cavity in the sheet stacking direction, the stack of sheets to have a bend line in a lateral direction across a face of the stack and centrally located between opposed longitudinal ends of the stack.

Preferably, the dispenser defines an elongate cavity for receiving the elongate stack of sheets according to the present invention or an elongate package comprising the stack of tissue paper sheets according to the present invention, wherein the dispenser is open at a front face for loading the stack or package therethrough into the cavity, wherein the dispensing opening and the cavity are oriented so that there are a sheet withdrawal direction and a longitudinal direction of the cavity that are perpendicular to one another and perpendicular to both of these directions is a front back direction.

Preferably, the dispenser includes the first and second walls defining top and bottom faces of the cavity in a sheet withdrawal direction, which is also in the direction of a first line bisecting the angle between the first and second parts of the first and second walls. The dispenser includes end walls defining end faces of the cavity in a longitudinal direction of the cavity, which is a straight line extending through corresponding points in the sheet withdrawal direction on the end walls. In a front to back direction perpendicular to the longitudinal direction and the tissue withdrawal direction, there are a rear wall defining a rear face of the dispenser and an open front face of the cavity for loading purposes.

Preferably, the dispenser includes an opening or recess for wall mounting the dispenser by way of a wall fastener. Preferably, the dispenser includes a removable wall fastener that is to be fastened to a room wall and a recess for receiving the wall fastener, where edges of the wall fastener and the recess cooperate to attach the dispenser to its wall fastener, and wherein of the edges is bifurcated so that the other edge can be received in the bifurcation in a sliding manner.

In a fourth aspect of the present disclosure, there is provided a system of a dispenser and a package comprising the stack of absorbent tissue paper sheets according to the present invention, as described above with respect to the first to third aspects of the present disclosure. The dispenser has a housing defining a cavity for receiving the package and a dispensing opening, wherein the housing defines the cavity so as to hold the package in an opened configuration, wherein the package is in its flexed form and the dispensing opening of the package is aligned with the dispensing opening of the dispenser so that a user can withdraw a sheet from the stack through the dispensing openings.

Preferably, the dispensing opening of the package opens about a hinge portion of the package and the dispenser holds the package open in a configuration such that the dispensing opening transverses from 10° to 80° about the hinge portion, 15° to 70°, 20° to 60°, 25° to 50° or 40°, 25° to 35° and preferably about 30°. When the dispensing opening of the package is in the closed configuration, the package is 0° open about the hinge portion. If the opening angle is too great, interfolding of sheets in the stack could come undone.

Preferably, the package has a hinge portion as described above and the dispenser housing defines a path of the cavity to include a v shape such that the hinge portion of the package is located at a peak of an inside edge of the v shape of the cavity. Preferably, the dispensing opening of the dispenser is located at a position where an outside edge of a peak of the v shape of the cavity would otherwise have been. Preferably, the dispenser is as described above with respect to the fourth aspect of the present invention. The package of sheets is preferably a refill package of sheets and the cavity is for being loaded with the refill package.

According to the present invention, there is provided a stack of interfolded absorbent tissue paper sheets comprising the features of claim 1. The interfolding pattern is such that each sheet is folded once to provide leading and trailing panels with respect to a tissue withdrawal direction, which is a direction normal to the plane of the sheets in the stack. The interfolding pattern is such that for any given tissue in the stack, a trailing panel of an adjacent tissue subsequent in the stack in the tissue withdrawal direction is in face to face, overlapping relation with a leading panel of the given sheet and a leading panel of an adjacent sheet preceding in the stack in the sheet withdrawal direction is in face to face, overlapping relation with the trailing panel of the given sheet, such that the trailing panel of the subsequent sheet and the leading panel of the preceding sheet are disposed between panels of the given sheet, wherein the overlap of the given sheet with the trailing panel of the subsequent sheet and the leading panel of the preceding sheet is a partial overlap to provide an overlapping region of the given sheet where the leading and trailing panels of the given sheet overlap with the leading panel of the preceding sheet and the trailing panel of the subsequent sheet and a non-overlapping region of the given sheet wherein the leading and trailing panels of the sheet extend beyond the overlapping faces to a fold portion, thereby to define a stack comprising an overlapping region where adjacent sheets in the stack overlap and non-overlapping regions of the stack on opposed sides of the overlapping region wherein adjacent sheets of the stack do not overlap.

The overlapping and non-overlapping regions of the stack elongate the stack in a first direction of the stack from the non-overlapping region to the overlapping region and to the non-overlapping region, wherein the first direction is perpendicular to the sheet withdrawal direction. This elongation may be desirable in certain stack applications and is achieved by the interfolding arrangement. Further, the weight of the stack is biased in the overlapping region, which may provide improved dispensing when the overlapping region is aligned with a dispensing opening of a dispenser or a stack package.

The sheets are single fold, two panel sheets.

The ratio of length of the overlapping region of the stack in the first direction to a length of the stack in the first direction (which is an inverse ratio of length of non-overlapping regions to a length of the stack) is in the range of 0.25 to 0.50. This range provides sufficient overlap of the sheets for the withdrawal of a sheet to pull the preceding tissue out from the stack by way of the face to face interaction of the sheets, while the overlap is not so great as to nullify the elongation and weight centring effects. The greater the degree of overlap, the less air there is in the package, which is largely contained in the non-overlapping portion.

The panels of any given sheet in the stack may be connected by a fold line. The panels may be connected by a line of perforations or other line of weakness to allow a panel to be torn off from its adjacent panel. The sheets may be folded at the line of weakness so that the fold line constitutes the line of weakness.

In a preferred embodiment, the stack of sheets is provided as a package of sheets as defined above with respect to the above aspects of the present disclosure. The stack of sheets according to the present invention may also be provided in a container or a dispenser as described above with respect to the third aspect of the present disclosure.

The combination of the stack of sheets according to the present invention and the package comprising such a stack of sheets and overlapping lips for a dispensing opening according to the first or second aspect of the present disclosure provides a functional complex that can be particularly useful. The overlapping region tends to weigh down on the dispensing opening of the package if oriented so that gravity is aligned with the withdrawal direction of the tissues. The overlapping lips are thus particularly important for avoiding the tissues falling through the dispensing opening.

In a generally applicable feature, the package or dispenser preferably has a dispensing opening that is substantially the same width or greater than the sheets, with respect to a direction along the face of the sheets perpendicular to the withdrawal direction, such that as a sheet is pulled out from the stack through the dispensing opening and optionally also the overlapping lips, opposing sides edges, in the width direction, of the sheet are able to maintain their lateral spacing. In the prior art, dispensing openings, particularly lips for holding tissue in a protruded state from a tissue box, tend to crumple the tissue width-wise into a more snake like configuration. The overlapping lips are configured so that a passage between them is sized so as to enable a sheet to pass through them with lateral constriction. An advantage of a roll of tissue is that it does not have to be so crumpled to dispense it. The package or dispenser of the present disclosure is able to allow the stack of sheets according to the present invention to not crumple upon dispensing.

In a fifth aspect of the present disclosure, there is provided a moist sheet or tissue paper sheet dispenser, the moist sheet dispenser comprising a receptacle housing for receiving a stack according to the present invention, wherein the stack is of moist sheets, the receptacle housing comprising a dispensing opening through which a sheet can be withdrawn from the stack, the receptacle housing being configured to maintain moistness of the sheets, and the dispenser comprising a lid that has an open position to provide access to the dispensing opening so that a sheet can be withdrawn from the stack through the dispensing opening and a closed position covering the dispensing opening, wherein the lid defines a periphery and the receptacle defines a periphery and the peripheries of the lid and the receptacle meet when the lid in the closed position.

The moist sheets preferably include non-woven sheet material. They may be made of non-woven fibres such as paper making fibres including to a major extent polymer fibres. The moist sheets may be a combination of non-woven and woven sheets. In the following, the moist sheets will often be referred to as non-woven sheets, but this is not to be construed as limiting.

In prior art moist sheet dispensers, the receptacle has a lid and the receptacle lid includes a dispensing opening and a cover for the dispensing opening. The cover for the dispensing opening is provided in a central region of the receptacle lid and is pivotably mounted to it. The two part configuration of the receptacle lid results in a junction between the two parts that tends to accumulate dust and other such debris. Cleaning of the junction area after sustained use proves to be difficult. The one part construction also enables the dispensing opening cover to be relatively large, which may ease opening of the lid for less dextrous users.

The present disclosure provides a lid for the receptacle and cover for the dispensing opening that is one part and thus avoids the presence of debris accumulating junction. Preferably, a top surface of the lid (the surface opposed to the dispensing opening side bottom surface) is continuous for ease of wiping clean as compared to a top surface having a discontinuity as with the two part construction of the prior art.

In order to allow loading of the receptacle with a refill of moist sheets, the receptacle is configured to be bottom loadable. The bottom provides an opposed face of the dispenser to the lid in the closed configuration. Preferably, the dispenser includes a bottom part that is removable to load moist sheets in the receptacle. The bottom part has upstanding sidewalls that friction fit with sidewalls of the housing in order to secure the removable bottom to the receptacle housing. This bottom loading configuration is an independently applicable feature of the present disclosure as outlined below in the sixth aspect of the present disclosure.

Bottom loading of the dispenser means that the lid is not required to serve the dual functions of enabling a receptacle to be loaded and to enable a dispensing opening to be covered. Accordingly, the lid can be made a one part device as provided for in the fifth aspect of the present disclosure. The removable construction of the bottom part and its friction fit mechanism for securing it to the receptacle is advantageous in terms of manufacturing, as compared to hinge arrangements, and also in terms of easing a sheet loading procedure. In prior art moist sheet dispensers as described above, the lid is pivoted away from the receptacle by way of a hinge to load the stack of moist sheets, and the cover has to be pivoted away from the lid about another hinge to thread a tissue sheet through the dispensing opening and then both lids are shut. This is a relatively fiddly operation that can be difficult to perform, particularly for elderly users. In the bottom loading arrangement of the present disclosure one hinge is not necessary, since the bottom part is removable and mountable by friction fit. Further, bottom loading enables threading of the sheet through the dispensing opening and moving of the stack into the receptacle to be carried out in the same direction.

Preferably, the sidewalls of the bottom part are part of an upstanding platform upon which a moist sheet stack is to be placed. A platform surface on which the stack is to lay defines a bottom of the receptacle. The bottom part may define a non-flat surface upon which the dispenser stands, where non-flat is to be understood with respect to the flat upper surface of the upstanding platform and the surface of the lid when it is in the closed configuration that is parallel to the upper surface of the platform. Thus, in one arrangement, the bottom part defines a v shaped bottom surface for the dispenser to stand on, which is able to mate with a v shape upper surface as described with respect to the tissue dispenser of the third and fourth aspects of the present disclosure. Alternatively, the bottom part could define an arc so as to stand on a circular toilet roll dispenser. In both cases, the point is that an inter-fitting system of dry tissue paper and moist sheet can be provided, whereby a room surface for the moist sheet dispenser is not required, thereby saving space.

In a further preferred arrangement, a centre of gravity of the dispenser lies inside the bottom part. This feature provides stability to the moist non-woven sheet dispenser and a feeling of permanence that is not present in prior art dispensers.

Preferably, the bottom part is made of rubber or a rubber-like material. The rubber material provides good elastic properties for friction fit with the receptacle and also stabilises the dispenser with respect to the surface upon which it stands.

Preferably, the receptacle housing comprises a platform having the dispensing opening located, preferably centrally, therein. The platform has depending side walls defining a periphery of the receptacle, while the platform defines a top of the receptacle.

Preferably, the periphery of the receptacle has an upstanding flange for mating engagement with a depending flange of the periphery of the lid. Preferably, the flanges seal with one another so that there is a moisture seal between the lid and the receptacle. Preferably, the upstanding flange is formed about a periphery of the platform.

Preferably, there is a moisture seal between the lid and the receptacle when the lid is in the closed position.

Preferably, the dispensing opening is provided with a deformable member that defines a relatively constricted pathway for the tissue paper sheet as compared to the dispensing opening. The deformable member has an opening to define the pathway for the tissue through the dispensing opening, while squeezing the tissue as it passes therethrough.

In an sixth aspect of the present disclosure, there is provided a moist sheet dispenser, the moist sheet dispenser comprising a receptacle housing for receiving a stack according to the present invention, wherein the stack is of moist sheets, the receptacle housing comprising a dispensing opening through which a sheet can be withdrawn from the stack, and the dispenser comprising a top lid that has an open position to provide access to the dispensing opening so that a sheet can be withdrawn from the stack through the dispensing opening and a closed position covering the dispensing opening, wherein the dispenser includes a bottom part that is removable to bottom load moist sheets in the receptacle, and wherein the bottom part has upstanding sidewalls that friction fit with sidewalls of the housing in order to secure the removable bottom to the receptacle housing.

The bottom part of the sixth aspect of the present disclosure may include preferred features associated with the bottom part as described above with respect to the fifth aspect of the present disclosure.

Preferably, the fifth and sixth aspects of the disclosure provide a moist sheet dispenser that comprises the stack according to the present invention, wherein the stack is of moist sheets, which stack is located in the receptacle.

In a seventh aspect of the present disclosure, there is provided a system comprising a dry tissue paper dispenser having a dispensing opening through which dry tissue sheets of a stack according to the present invention can be withdrawn and a moist sheet dispenser comprising a dispensing opening through which moist sheet can be withdrawn, wherein one of the dry tissue dispenser and the moist sheet dispenser is configured to sit atop the other so that the dispensing openings face in opposing directions in a combined configuration, thereby defining opposing moist and dry withdrawal directions, and wherein the dry and moist sheet dispensers have cooperating interfacing surfaces when they are in the combined configuration that resist lateral movement of the moist sheet dispenser with respect to the dry tissue paper dispenser in a direction perpendicular to a sheet withdrawal direction of the dry tissue paper dispenser and the moist sheet dispenser, while allowing the dispenser sitting atop the other to move in a direction from the other dispenser's dispensing opening to its dispensing opening.

The cooperating interfacing surfaces are preferably in the form of male and female cooperating surfaces. The surfaces, preferably, define substantially an entire bottom or top face of the respective dispenser.

Preferably, the dry tissue paper dispenser includes a recess or hole for receiving a wall fastener therein to fasten the dry tissue paper dispenser to a room wall. The lateral direction is perpendicular to a line normal to the room wall and to the sheet withdrawal direction for the dry and moist sheet dispensers.

In this way, a dual moist and dry sheet dispensing system is provided. The system has one of the dispenser mounted atop the other, which is space saving and material, as well as being convenient in terms of access of both types of tissue. In the prior art, there is no designated space for a moist non-woven sheet dispenser to be disposed as compared to, for example, conventional toilet tissue roll holders.

The cooperating interfacing surfaces are preferably in the form of the bottom face of the moist sheet dispenser matching a top face of the dry tissue paper dispenser. Preferably, the cooperating interfacing surfaces are in the form of the bottom face defining a depending V-shape across substantially a whole extent from one side of the bottom of the moist sheet dispenser to an opposing side thereof, wherein the dry tissue paper dispenser has a top surface defining a matching V-shaped repress.

Preferably, the cooperating interfacing surfaces extend in the tissue withdrawal direction of the moist and dry tissue paper dispensers at an angle thereto or parallel thereto in order to resist relative movement between the dispenser in the first direction, yet the cooperating interfacing surfaces do not resist the dispenser sitting atop the other from being withdrawn in its tissue paper withdrawal direction.

Preferably, the cooperating interfacing surfaces resist movement of the moist sheet dispenser relative to the dry tissue paper dispenser in first and second perpendicular directions in a lateral plane extending perpendicularly to the tissue withdrawal direction.

### Brief description of the figures

The various aspects of the tissue systems of the present disclosure will be described in the following with respect to the figures as briefly outlined below.
Fig. 1 shows various views of a package comprising a stack of tissues according to an embodiment of the present invention.
Fig. 2 shows various views of a dispenser for holding a package of tissues including a dispensing opening through which tissues from the package can be withdrawn. Figs. 2c and 2d show the dispenser with the package respectively partially and fully inserted into the dispenser.
Fig. 3 shows perspective views of a wall mounting means for mounting a dispenser as shown in Fig. 2 to a room wall.
Fig. 4 shows respective views of the package comprising a stack of tissues according to an embodiment of the present invention. A closed configuration of the package is shown in Fig. 4a. An opened configuration of the package is shown in Fig. 4b. A bottom end view, which shows in plan overlapping lips of the package is shown in Fig. 4c.
Fig. 5 shows a package comprising a stack of tissues according to an embodiment of the present invention that has a cover for covering a portion of this stack of tissues that would otherwise be revealed as the front face of the package opens into the dispensing opening of the package.
Fig. 6 discloses a package comprising a stack of interfolded tissues according to an embodiment of the present invention, wherein the interfolding is such that the stack of tissues is elongate and each tissue in the stack is elongate and aligned so that a longitudinal axis of the tissues and the stack are aligned and so that longitudinal end portions of any given tissue overlap with longitudinal end portions of adjacent tissues preceding and succeeding in the stack.
Fig. 7 discloses a moist non-woven dispenser. The moist non-woven dispenser is in an open configuration in Fig. 7a and is in a closed configuration in Fig. 7b. Fig. 7c shows a removable bottom part of the moist non-woven sheet dispenser on its own.
In Fig. 8, there is disclosed a moist and dry tissue dispensing system comprising a moist non-woven sheet dispensing part that sits restingly on a dry tissue dispensing part.

### Detailed description of preferred arrangements of the present disclosure

Improved absorbent tissue paper systems are provided by the present disclosure in its various aspects.

There is provided a package of tissues that can be broken open by grasping opposing longitudinal ends of the package and applying relative force to a backside of a perforation line positioned centrally between the longitudinal ends and which extends laterally. The perforation line extends about at least three sides of the package so that at least part of a fourth side provides a hinge portion connecting the longitudinal halves of the package together and also allowing the broken perforation line to be brought together for closing the package and to be brought apart for opening the package in a rotational motion about the hinge. In a closed configuration, the package is block shaped. In an open configuration, the package is flexed into a V-shape in a side view, wherein the opposing longitudinal halves and the hinge portion provide an inside edge of the V-shape and bottom surfaces of the opposing longitudinal halves provide an outside edge of the V-shape in combination with a portion of the package opposed to the hinge that has been moved apart by spreading apart opposing edges of the perforation line. The open perforation line reveals a stack of tissues comprised in the package. A tissue can be withdrawn from the stack and the package through a dispensing opening provided by the open perforation line at a side opposite to the hinge portion.

In the open configuration of the package, a bottom side of the perforation line extends between opposing sides of the perforation line. The opposing sides of the perforation line respectively connect opposing ends of the bottom side of the perforation line to the hinge portion. In the open configuration, the sides of the perforation line become more spread apart towards the bottom side of the perforation line. A stack of tissues according to an embodiment of the present invention is arranged in the package so that a pull tab portion of the tissue most proximal to the bottom side of the perforation line extends through the bottom side of the perforation line. The bottom side of the perforation line thus provides a dispensing opening through which tissues in the stack can be withdrawn.

The dispensing opening has opposing first and second lip members disposed on respective sides of the dispensing opening, which overlap with one another so as to cover the tissue facing the dispensing opening in all but a central opening through the overlapping lip members through which a pull tab portion of a tissue in the stack most proximal to the dispensing opening can be grasped by a user. The first and second overlapping lip members are movable relative to one another. They are respectively attached to opposing halves of the package so that as one half of the package is moved relative to the other half of the package about the hinge portion, the overlapping lip members move with them and relative to one another. In the opened configuration of the package and in the closed configuration, the lips overlap. As a tissue is withdrawn from the stack and through the dispensing opening, the overlapping lip members deform into a less overlapping configuration so as to ease passage of the tissue from between the lip members in the tissue withdrawal direction.

The package includes at least one cover member for covering the tissue that is revealed by the package as at least one of the side perforations opens. The dispensing opening reveals a face of the stack of tissues when it is in the open configuration, while the side perforation reveals the layer of tissue in the stacking direction when it is in the open configuration. The cover is transparent so as to allow a level of the tissues in the package to be viewed so that the user gets an idea as to how close the package is to being empty.

The tissues in the stack in the package are interfolded so that each tissue in the stack is partially overlapped with a preceding tissue in the stack so as to pull the preceding tissue partially through the dispensing opening and the overlapping lips as a result of the face-to-face partial overlap of each tissue with a preceding tissue. The portion of the preceding tissue that was in overlapping relation with a tissue that has been withdrawn from the stack through the dispensing opening and the overlapping lips thus sticks out through the overlapping lips as a tissue that will next be grasped by a user. The interfolding pattern is such that when a first tissue is pulled out through the overlapping lips, the next, second, tissue will be on a left hand side face, for example, of the first tissue and the tissue after that, the third tissue, will come out on a right hand side face, for example, of the second tissue. This alternation of sides with respect to the tissue being pulled out at which the overlapping portion occurs results in the first and second lip members alternating with respect to which of the first and second lip members is more forward in the tissue withdrawal direction than the other.

The package of tissues is self supporting in that it can hold the opened configuration, even with the weight of gravity in the hinge portion. This allows the dispensing opening to be top up for positioning on a counter top for tissues to be withdrawn from it in a style familiar to that known from a conventional facial tissue box. The package may also be used in an upside down configuration so that the dispensing opening faces downwards. In the latter configuration, the present disclosure contemplates a dispenser that is wall mountable and has a cavity for holding the opened configuration of the package. When the opened configuration of the package is V-shaped as described previously, the cavity of the dispenser is correspondingly V-shaped, whereby walls defining the cavity are dimensioned so as to fittingly receive the package in the opened configuration. The shape of the cavity as defined by the dispenser prevents the package from moving back to a block shaped closed configuration and thus holds the package in the opened configuration. The dispenser has a dispensing opening on a bottom surface thereof for aligning with the dispensing opening of the package so that tissues can be withdrawn through the dispensing opening and the overlapping lips of the package and through the dispensing opening of the dispenser. The dispenser can be a relatively low complexity structure in that it consists of a back wall for mounting against a room wall and a sidewall protruding therefrom that extends about the cavity in a continuous manner from one side of the dispensing opening, about each side of the cavity defining a V-shape, to the other side of the dispensing opening.

A dispenser as described above has a V-shaped recess defined by a top surface of the sidewall, where the top surface is opposed to a bottom surface of the sidewall that includes the dispensing opening that is centrally located between opposed longitudinal ends of the cavity defined by the sidewall. The V-shaped recess is so shaped to receive a depending V-shape of a bottom part of a moist non-woven dispenser. Accordingly, the top surface of the dry tissue dispenser provides a specially designed space for a moist non-woven sheet dispenser.

The moist non-woven dispenser has a bottom part defining a depending V-shaped bottom surface for cooperating and interfacing with the V-shaped top surface of the dry tissue dispenser. The moist non-woven sheet dispenser includes a receptacle for receiving a package of moist non-woven sheets or a stack of moist non-woven sheets and a lid that is mounted by a hinge to a housing of the receptacle. The hinge allows the lid to open so as to reveal a dispensing opening of the receptacle housing through which moist non-woven sheets can be dispensed. The hinge also allows the lid to be closed so as to seal with the receptacle housing to prevent moisture from the tissues escaping from the moist non-woven sheet dispenser. A periphery of the lid mounts with a periphery of the receptacle housing so as to present a continuous easy wipe top surface of the moist non-woven sheet dispenser. A bottom part of the moist non-woven sheet dispenser, which includes the depending V-shape, is removable and is friction fit remountable to the receptacle housing. The bottom part includes an upstanding platform that engages with sidewalls of the housing in a friction fit manner and also provides an even surface upon which the stack or package of moist non-woven sheets sits. Thus, the platform provides a bottom surface of the receptacle housing, which removably mates with sidewalls of the housing. The receptacle housing also includes a top surface having the dispensing opening centrally located therein. The sidewalls of the receptacle housing define the periphery of the receptacle housing, which sealingly mates with the periphery of the hinged lid.

Various components of the improved tissue system outlined above will now be described in greater detail with respect to the figures.

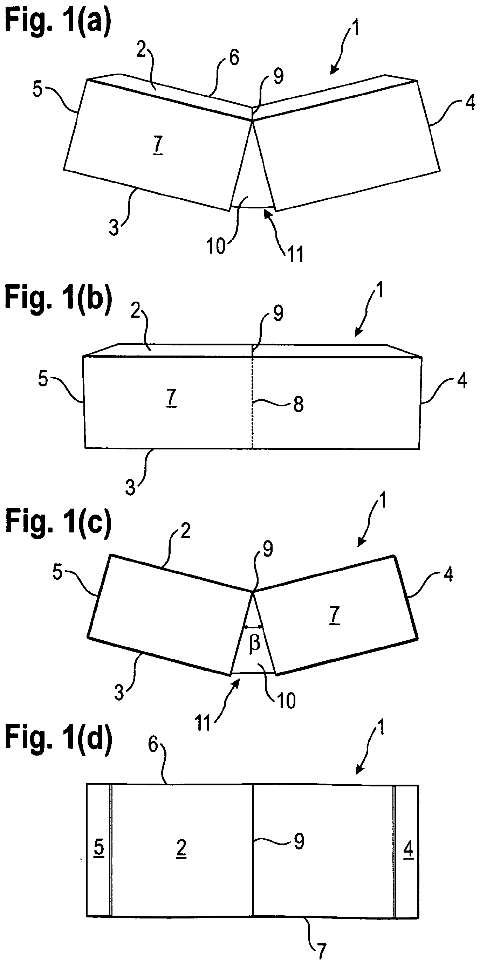

Fig. 1 shows a package comprising a stack of tissues according to an embodiment of the present invention. The package 1 has an open configuration as shown in Figs. 1a and 1c and a closed configuration as shown in Fig. 1b. In the closed configuration, the package 1 is generally block-shaped. The package 1 has first and second major faces provided by respective top and bottom face walls 2, 3 of the package. At opposing longitudinal ends of the package 1, there is end face walls 4, 5, which are minor faces of the package 1. The package 1 further comprises back and front face walls 6, 7, which are intermediate in area size between the major top and bottom faces 2, 3 and the minor end faces 4, 5.

The package 1 comprises a perforation line 8 extending through the back and front face wall 6, 7 and the bottom face wall 3 of the package. 1. The perforation line 8 is located centrally between opposing ends 4,5 of the package 1 and extends perpendicularly to a longitudinal direction of the package 1. The top face wall 2 of the package 1 comprises a hinge 9 connecting the end of the perforation line at the front face wall 7 and the other end of the perforation line 8 at the back face wall 6 of the package 1.

The package 1 is filled with a stack of interfolded tissues 10 according to an embodiment of the present invention. In a closed configuration of the package 1, the stack of interfolded tissues 10 is entirely covered by the package 1.

In an opened configuration of the package 1, the perforation line 8 is broken apart and opposing halves, in the longitudinal direction, of the package 1 are connected by and rotatable about the hinge 9. The opened configuration of the package 1 can be seen in Figs. 1a and 1c, while the closed configuration of the package 1 can be seen in Fig. 1b. In the opened configuration, a gap between opposing parts of the bottom face wall 3, which have come apart as a result of the perforation line 8 being broken, provides a dispensing opening 11 through which a tissue can be withdrawn from the stack 10. The back and front face walls 6, 7 of the package 1 also have respective parts that are spaced apart from one another about the hinge 9 in the opened configuration of the package 1. The gap between the back and front face parts comes to nothing at the hinge 9 at a top edge of the back and front face walls 6, 7 and is at its widest at a bottom edge of the back and front face walls 6, 7 in the opened configuration of the package 1.

The back and front face walls 6, 7 and the end face walls 4, 5 define a thickness of the package 1 connecting the top and bottom faces 2, 3. The number of tissues that can be stacked and fit within the package 1 is determined by the thickness of the package 1, i.e. it defines the sheet stacking direction of the absorbent tissue paper. The tissues in the stack 10 and the stack 10 itself is elongate and the tissues and the stack 10 are longitudinally aligned with the longitudinal direction of the package 1 when the package is in the closed configuration. The distance between the end face walls 4 and 5, as defined by the back and front face walls 6, 7 and the top and bottom face walls 2, 3, determines the longitudinal extent of the stack 10. An interfolding pattern of the tissues in the stack 10 is such that a pull end of a tissue, which is a laterally extending edge of the tissue, is located at the dispensing opening 11 of the package 1. The thickness direction of the package 1 is dimensioned to be convenient for grasping in the hands of a user at opposed longitudinal ends of the package 1. Typical dimensions of the thickness direction of the package 1 are from 5-10 cm, preferably about 7 cm.

To use the package, a user grasps opposing longitudinal ends of the package 1 so that the fingers and thumbs are positioned in contact with the top and bottom face walls 2, 3 of the package 1 and part of the palms are in contact with respective end face walls 4,5. With the package 1 so grasped, the user flexes the package so as to provide a rotational force about the hinge 9 tending to pull the perforation line 8 apart. The perforation line 8 is thus broken to reveal a stack of tissues 10 in the stacking direction by viewing through the gap made by the broken perforation line 8 in the front or back face wall 6, 7 and to reveal a plane of a face of a forward most tissue when viewing through a gap between opposing parts of the bottom face 3, which gap provides the dispensing opening 11. A tissue can be withdrawn from the stack 10 through the dispensing opening 11.

When the package 1 is first opened, a forward most tissue in the stack 10 relative to the dispensing opening 11 is designed to have an edge portion that protrudes through the dispensing opening 11. This edge portion of the tissue can be pulled upon to withdraw a tissue from the stack 10 through the dispending opening 11. The interfolding pattern of the tissues of the stack 10 is such that as one tissue is pulled through the dispensing opening 11, a subsequent tissue is partially pulled through the dispensing opening 11 to protrude through the dispensing opening 11 to provide a subsequent end edge of a tissue for withdrawal from the stack 10.

The package 1 can be reclosed by rotating the partially separated parts (connected only by the hinge 9) about the hinge 9 to bring the line of weakness 8 back together. To dispense a further tissue from the stack 10, the package 1 can be reopened by rotation about the hinge 9.

The skilled person may contemplate various modifications to the specific arrangements of the package 1 shown in Fig. 1.

For example, various modifications could be made to the exact shape of the package 1 shown in figure 1. For functional reasons it has been preferred that the package 1 be elongate and the perforation line 8 and the hinge 9 be provided in a central location between longitudinal ends of the package 1. In this way, a turning moment about the hinge 9 can be utilised to make it feel easy to break the perforation line 8. It is also desirable that the longitudinal ends of the package 1 can be conveniently grasped by a user in order to apply the perforation line 8 breaking force. Thus, a thickness of opposing longitudinal end portions of the package 1 in the direction of the hinge 9 to the dispensing opening 11 should be conveniently graspable and thus of the order of the dimensions of a gap able to be made between the fingers and the opposed thumb by an average human adult.

In Fig. 1, a line of weakness is provided in the form of a perforation line 8. The skilled person can contemplate alternatives such as a line of weakness in the form of a cut that passes only partly through a thickness of the wall of the package and thus does not reach the inside of the package 1. That is, the line of weakness could be a score line. The perforation line 8 could be made in a number of ways. The perforation line 8 could extend continuously by way of alternating cut and tap portions through the front face 7, the bottom face 5 and the back face 6. Alternatively, the front face 7, the bottom face 3 and the back face 6 could be divided by a cut line extending most of the way there around, apart from a few small connecting tab portions that are broken by flexing of the package 1.

The tissues in the stack 10 of the package 1 are disclosed as being interfolded. Important is that the tissue is stacked, rather than rolled about a central core.

The package 1 has been described as having top and bottom face walls 2, 3, which suggests that the dispensing opening 11 faces downwards in use. In one envisaged use this is correct. The package 1 is, however, configured also to be tipped up so that the dispensing opening 11 faces upwards. The package 1 is configured to operate in this way in that the hinge 9 does not collapse under the weight of the stack 10 when the dispensing opening 11 is faced upwards. That is, the package 1 is sufficiently stiff to maintain the opened configuration, no matter which orientation the package 1 is placed in. The package 1 is closed by a user forcing it closed by rotation about the hinge 9.

The hinge 9 of the package 1 forms a fold line connecting opposing ends of the line of weakness or perforation line 8. The package 1 is, as described above, designed to rotate about the hinge 9 in opening and closing the package 1. The hinge 9 may define a fold line as a result of its first use, or the fold line may be prefabricated into the package 1, such as by a coining technique or the like.

The package 1 could have a tear off strip defined by a pair of spaced apart lines of weakness. When a tab of the tear off strip is pulled upon, the lines of weakness tear away to provide a torn off strip. When the tear away strip is fully torn away, the lines of weakness are broken and the package is able to be manipulated from a relatively closed configuration to a relatively opened configuration by rotation about the hinge. Thus, the pair of lines of weakness defining opposing sides of the tear away strip preferably extends around a majority of a lateral periphery of the package in the same way as the break open type line of weakness described above.

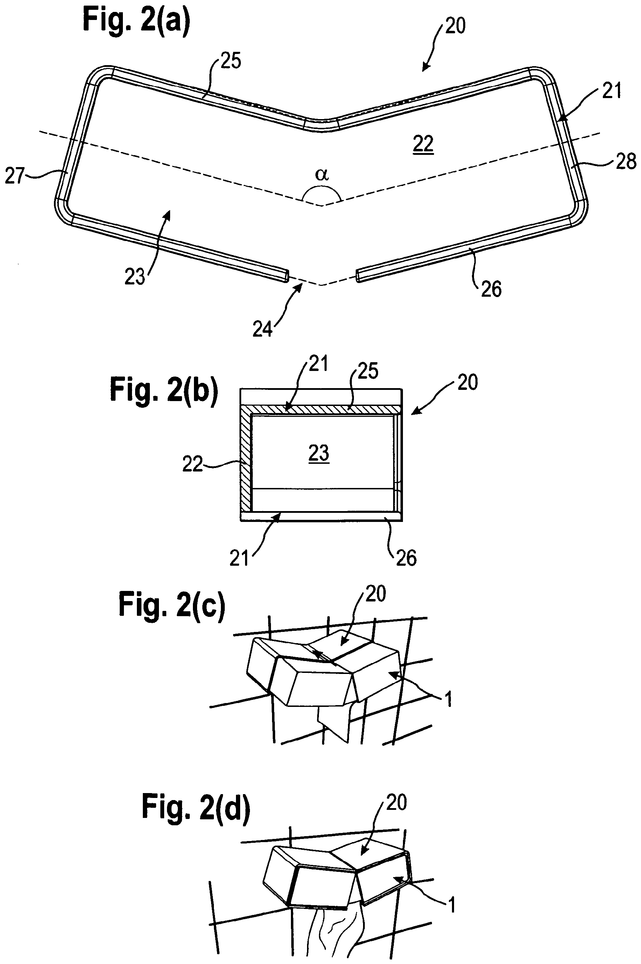

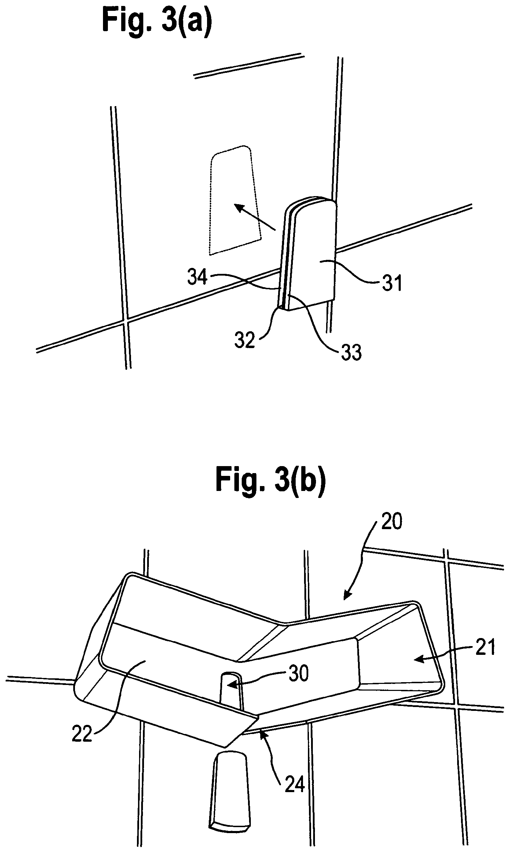

Fig. 2 shows various views of a dispenser for holding a package of tissues. The dispenser 20 is wall mountable, as will be discussed below with respect to Fig. 3. The dispenser 20 has a peripheral wall 21 extending in a normal direction to a back face wall 22. The peripheral wall 21 and the back face wall 22 together define a cavity 23 for receiving a package 1 of tissues therein, where the package 1 is as described above. A front face of the dispenser 20 is open in order to allow the package 1 to be loaded into the cavity 23. The rear face 22 is for mounting to a room wall, as will be described in further detail with respect to Fig. 3.

The peripheral wall 21 extends continuously about the cavity 23 and about a periphery of the rear face wall 22 except so as to define a gap in the peripheral wall 21, which provides a dispensing opening 24 through which a tissue can be withdrawn from a package dispensing opening from a package 1 as described above. The peripheral wall 21 of the dispenser defines a V-shape in that a top wall portion 25 and a bottom wall portion 26 of the peripheral wall 21 respectively follow V-shaped paths. The V-shape of the bottom wall portion 26 of the peripheral wall 21 can be constructed by imagining the bottom wall portion 26 not defining a dispensing opening 24 and instead continuing to intersect. The V-shaped bottom wall portion 26 and the V-shaped top wall portion 25 of the peripheral wall 21 are separated by end wall portions 27, 28 of the peripheral wall 21, which defines a thickness dimension to the V-shape of the cavity 23.

The peripheral wall 21 of the dispenser 20 is designed to fittingly mate with respective top and bottom face walls 2, 3 and end face walls 4, 5 of the package 1, when the package 1 is in the opened configuration. Further, in a depth direction of the dispenser 20, which is from the rear wall 23 to the open end face, the dispenser is designed to match with a corresponding depth of the package 1 so that when the package 1 is inserted into the dispenser 20, a front face 7.of the package 1 lies flush with a front end of the peripheral wall 21.

An angle α between legs of the V-shape of the cavity 23 is preferably in a range from 130° - 160° and preferably about 150°. An angle β is defined as shown in Fig. 1(c), which is the angle traversed by the dispensing opening 11 as compared to a 0° closed configuration of the dispensing opening 11. The angle β of the dispensing opening 11 about the hinge 9 is preferably in the range of 20° - 50°. The form of the dispenser 20 determines the opening angle of the package 1 by holding the package 1 open at that angle β in the opened configuration.

The package 1 is designed to be flexible so that it can be flexed for a user to break open the perforation line 8 to open the package 1. The dispenser 20 is a stiffer, relatively non-flexible flexible structure that is able to better hold the opened configuration of the package 1 and which is able to be mounted to a room wall at the back wall 22 of the dispenser 20 and take the load of the package 1 therein without deforming under the load. The dispenser 20 may be made of relatively thick molded plastic or metal. The package may be made of a plastic film, cardboard or paper.

To use, the package 1 may first be broken open as described above to put it into the opened configuration. The opened package may then be inserted in the dispenser through the open front face. Alternatively, manipulation of the package into the cavity 23 will tend to pull the perforation line 8 apart so as to open the package 1. As the package is pushed into the cavity 22 of the dispenser 20, a peak of the V-shape of the top wall part 25 of the peripheral wall 21 provides a first pressure point against the hinge 9 of the package 1. The bottom wall part 16 of the peripheral wall 21 provides second and third pressure points on either side of the dispensing opening 24 of the dispenser 20 against the bottom wall face 3 on either side of the perforation line 8. Thus, a three point load is applied to the package 1, which will break open the perforation line 8 so as to open the package 1. The package 1 can be pushed fully into the dispenser 20 as shown in Figs. 2c and 2d so that the peripheral wall 21 is in sliding relation with the top and bottom faces 2, 3 and the end faces 4, 5 of the package 1. The package 1 can be slid back until a back wall 22 of the dispenser 20 is contacted flush against a back wall 9 of the package 1.

The package 1 is held by the dispenser 20 in an opened configuration as shown in Fig. 2d. The dispensing opening 11 of the package 1 is aligned with the dispensing opening 24 of the dispenser 20 so that a tissue passes through the dispensing opening 11 of the package 1 and through the dispensing opening 24 of the dispenser 20 when a tissue is withdrawn from the stack of tissues 10 in the package 1. The angle defined by the cavity 23 defines the angle of the opened configuration of the package 1 because of the close conformance between top and bottom face walls 2, 3 and end face walls 4, 5 of the package 1 and the peripheral wall 21 of the dispenser 20. In the V-shaped opened configuration of the package 1, an angle between the legs is according to the ranges given above, which are such that a sufficient size dispensing opening 11 of the package 1 is provided, yet the angle is not so great that the weight of the tissues in the stack 10 tends to pull the stack through the dispensing opening 11 without a user pulling a tissue of the stack.

Various modifications could be made to the dispenser 20 according to that described above. For example, the dispenser 20 could be filled by a stack of tissues according to the present invention that is not provided in a package form. Such a stack of tissues would be interfolded so that a pull end of each tissue occurs at the location of the longitudinal central dispensing opening 24. In this case of the dispenser 20 itself forming a package for a stack of tissues, the dispensing opening 24 may be more constricted than that shown in Fig. 2a in order to avoid the stack of tissues unintentionally falling through the dispensing opening 24.

Fig. 3 shows a wall mounting means for mounting the dispenser as described above with respect to Fig. 2 to a room wall. In the figure, there is shown a tiled room wall for illustrative purposes. The dispenser 20 has a recess 30 provided in a back wall 22 of the dispenser 20. The recess 30 in the back wall is a continuation of the dispensing opening 24 provided in the peripheral wall 21 that extends in a direction normal to the back wall 22. The recess 30 is open at a bottom edge so that the dispenser 20 can be moved with respect to a fastening member 31 already fastened on a room wall to receive the fastening member 31 in the recess 30.

The fastening member 31 is plate-like and has a peripheral edge defining a thickness direction of the plate that is bifurcated so as to provide opposing lips 33, 34 having a recess therebetween. The opposing lips 33, 34 are dimensioned so that when the fastening member 31 is received in the recess 30 of the dispenser 20, the opposing lips 33, 34 engage on opposing faces of the back wall 22 of the dispenser 20. That is, the recess 32 of the fastening member 31 receives an edge of the recess 30 of the back wall 22 when the dispenser 20 is mounted to the fastening member 31. The fastening member 31 can be attached to the room wall using adhesive or other means such as screws.

To mount the dispenser 20 to a room wall, the fastening member 31 is adhered to the room wall. The dispenser 20 is positioned above the fastening member 31 and slid downwardly so that an edge, in the thickness direction of the recess 30 of the dispenser 20, is received in the recess 32 of the fastening member 31 so that the lips 33, 34 contact opposing faces of the rear wall 22 of the dispenser 20. The recess 32 of the fastening member 31 extends about three sides of the fastening member 31 including a top side portion and side portions extending in a depending manner therefrom so as to correspondingly receive top and side portions of the edge of the recess 30 of the dispenser 20 in the recess 32 of the fastening member 31. In this way, the dispenser 20 is secured to the fastening member 31 and thus to the room wall, in a direction normal to the room wall and in left, right and down directions as one faces the room wall and the dispenser 20. The dispenser 20 is only able to be dismounted from the fastening member 31, and thus the room wall, by moving it in a direction opposite to which the dispenser 20 is slid onto the fastening member 31 during mounting. That is, to remove the dispenser 20 from the room wall and the fastening member 31, the dispenser 20 must be moved in an upward direction until an edge of the recess 30 comes out of contact, and out of being disposed between, the first and second lips 33, 34 of the fastening member 31. Thus, the fastening member 31 enables the dispenser 20 to be moved into a released configuration so as to be out of contact with the fastening member 31, which may prove useful for tissue loading and cleaning purposes.

, Modifications may be made to the specific arrangement shown in Fig. 3 for enabling the fastener 20 to be mounted to a room wall. For example, the fastening member 31 or indeed the dispenser 20 could have suction cups to secure it to the room wall. Alternatively, a fastening member mounted to the room wall and the dispenser could have a magnetic cooperation for holding them together. In another example, the dispenser 20 could be affixed directly to the room wall by way of screw receiving holes through which screws are drilled into the room wall to clamp the dispenser 20 against the room wall. In another possibility, the dispenser 20 could define at least one channel having an enlarged opening through the back wall 22 of the dispenser 20. The enlarged opening in the channel is sized to allow an enlarged head of a fastening member that protrudes from the room wall to enter into it. The dispenser 20 can then be moved relative to the fastening member 31 so that the enlarged head of the fastening member slides within the channel to a position where the fastening member 31 cannot pass out of the channel in a direction normal to the room wall, and preferably also in left and right directions as a user faces the dispenser 20 and the room wall. In order to remove the dispenser 20 from the fastening member 31 in such a configuration, the enlarged head must be moved through the channel until it reaches the enlarged opening when the dispenser 20 can then be moved in a direction normal to the room wall to detach it from the room wall and the fastening member 31.

It is, however, preferred that the fastening member 31 and the dispenser 20 be mounted to one another by sliding the dispenser 20 from a position displaced from the fastening member 31 to a position overlaying the fastening member 31 whereat they cooperate so that movement of the dispenser 20 relative to the fastening member 31 is prevented in a direction normal to the room wall/plane of the fastening member and/or where relative movement is only possible in a direction opposite to the initial direction to slidably mount the dispenser 20 to the fastening member 31.

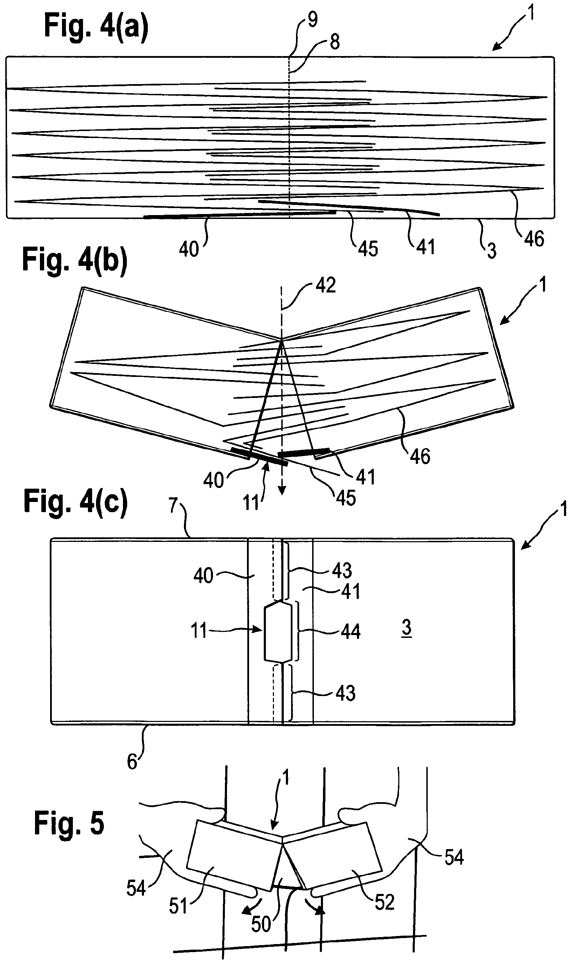

Figs. 4a, 4b and 4c show various views of a package comprising a stack of tissues in accordance with a preferred embodiment of the present invention. The package 1 is substantially as hereinbefore described with reference to Fig. 1 in that it is openable and closable by breaking open a perforation line 8 as the package 1 is flexed in a rotational direction about the perforation line 8. The package 1 of Figs. 4a to 4c further comprises lip members 40, 41 that overlap when the package 1 is in the opened configuration as shown in Figs. 4b and 4c. The overlap is in the tissue withdrawal direction in that a tissue withdrawal direction line 42 passes through both the first and the second lips. The tissue withdrawal direction line is a line that passes through a centre of the dispensing opening, where centre is to be understood as the centre between the opposed parts of the package 1 in the direction in which they move apart in going from the closed configuration to the opened configuration of the package 1. Looked at in another way, the first lip member 40 has a major face that is in face-to-face relation with a major face of the second lip member 41 at an overlapping portion of the first and second lip members 40, 41.

The first and second lip members 40, 41 are flexible in that they are able to deflect downwardly in the tissue withdrawal direction 42 and as they do so, the first and second lip members 40, 41 move apart into a non-overlapping relation (not shown). In Fig. 4b, the first lip member 40 is shown to be more forwardly disposed than the second lip member 41 in the tissue withdrawal direction 42. The first and second lip members 40, 41 are flexible enough to be able to move into the opposite configuration, whereby the second lip member 41 is more forwardly disposed than the first lip member 40 in the tissue withdrawal direction 42. Further, the first and second lip members 40, 41 are resilient in that after deformation in the tissue withdrawal direction and into a non-overlapping state, they resiliently reform into an overlapping state.

Referring to Fig. 4c, the overlapping lips 40, 41 can be seen in a plane view of a bottom face 3 of the package 1. The overlapping lips 40, 41 are shown with the package 1 empty of tissues so that both lips 40, 41 can be seen. If there was tissue in the package 1, the lip 41 would be covered by a pull tab portion of a bottom-most tissue closest to the dispensing opening 11 that protrudes through the dispensing opening 11 and the lips 40, 41. The overlapping lips extend across the dispensing opening 11 of the package 1 when the package 1 is in the opened configuration in a longitudinal direction of the package 1. The dispensing opening 11 is provided in a bottom face 3 of the package and extends between a front face 7 and a back face 6 of the package 1 to provide a dispensing opening 11 that is open along a full width of elongate tissues in the stack of tissues 10 in the package 1 so as to avoid crumpling of the tissues in the width direction of the tissues during dispensing. The overlapping lips 40, 41 likewise extend substantially along the full length of the dispensing opening 11, which is from a front face wall 7 to a back face wall 6 of the bottom face 3 of the package 1. The lips 40, 41 overlap at a opposing ends in a length direction of the elongate dispensing opening 11, where overlap is to be understood in the context of the lips 40, 41 being deformed in the tissue withdrawal direction 42 into a non-overlapping state. There is thus provided overlapping portions 43 of the overlapping lips 40, 41 at opposing longitudinal ends of the dispensing opening 11 and a central non-overlapping portion 44 disposed longitudinally between the opposing overlapping portion 43. The overlapping portions 43 cover the tissue in a tissue withdrawal direction 42 while the non-overlapping portion 44 leaves the tissue in the package 1 uncovered in the tissue withdrawal direction 42. The non-overlapping portion 44 allows a user to reach through the lips 40, 41 to grasp a tissue most proximal to the dispensing opening 11 in order to pull a pull tab portion of that tissue through the dispensing opening 11 and through the overlapping lips 40, 41 for subsequent dispensing.

In use, a closed package 1 as shown in Fig. 4a is taken and the perforation line 8 is broken apart by rotating opposed longitudinal parts of the bottom face 3 on either side of the perforation line 8 about the hinge 9 in a direction so that the opposing parts of the bottom face 3 are moved apart and the perforation line 8 is thus broken. In the closed configuration 1, the overlapping lips 40, 41 are disposed in a most overlapping state with a tissue 45 positioned between the more forward lip 40 in the tissue withdrawal direction 42 and a less forward lip 41 in the tissue withdrawal direction 42. In the closed configuration shown in Fig. 4a, before the perforation line 8 is broken, the overlapping lips 40, 41 are confined inside the walls of the package 1. As the package 1 is opened as described above, the lips 40, 41 move apart as they are attached at one end to the opposing parts of the bottom face wall 3 on either side of the perforation line 8. The lips 40, 41 thus move from a most overlapping configuration when the package is closed to a less overlapping, but still overlapping, configuration as shown in Fig. 4b.

Referring to Fig. 4b, with the package 1 in the opened configuration, the tissue 45 most proximal to the dispensing opening 11 has a portion protruding through the dispensing opening 11 and protruding from between (in the tissue withdrawal direction 42) the overlapping lips 40, 41 so as to provide a pull tab portion of the tissue 45 for grasping by a user to dispense the tissue 45. The overlapping lips 40, 41 contact opposing faces of the tissue 45 protruding through the lips 40, 41.

As a user pulls on the tissue 45 in the tissue withdrawal direction 42, the more forwardly disposed lip 40 is deformed in the tissue withdrawal direction 42, which also places the lips 40, 41 in a non-overlapping configuration. The subsequent tissue in the stack adjacent the tissue 45 being pulled through the dispensing opening 11 and the lips 40, 41 is pulled with the tissue 45 in the tissue withdrawal direction 42 because the subsequent tissue 46 and the tissue 45 being dispensed are in face-to-face contact. The subsequent tissue 46 comes out through the lips 40,41 so that the tissue 45 is in contact with the more forwardly disposed lip in the tissue withdrawal direction 42 and the subsequent tissue 46 is in contact with the less forwardly disposed lip 41 in the tissue withdrawal direction 42. As the first tissue 45 in the tissue withdrawing sequence of the stack of tissues 10 is pulled through the dispensing opening 11 to such an extent that the next tissue 46 in the tissue withdrawal sequence of the stack of tissues 10 comes into contact with the lip 41, the lip 41 is further deformed in the tissue withdrawal direction 42 to allow the subsequent tissue 46 to be pulled through the first and second lips 40, 41. Once the first tissue 45 is pulled completely through the dispensing opening 1 and the lips 40, 41 so that the tissue 45 is no longer in contact with either of the lips 40, 41, that tissue 45 has been dispensed. At this point, the lip 41 falls back to its original non-deformed state at a slower rate than the lip 40 because of the contact of the subsequent tissue 46 with it. Accordingly, the previously more forwardly disposed lip 40 falls back so as to be behind the previously more rearwardly disposed lip 41 in the tissue withdrawal direction 42. The lips 40, 41 have thus alternated with respect to which of the lips is more forwardly disposed as each tissue is dispensed.

The tissue 46 is now the first tissue in the tissue withdrawal sequence of the stack of tissues 10 and protrudes through the lips 40, 41 to provide a pull tab portion for grasping by a user to dispense the tissue 46. This sequence of steps repeats for each subsequently withdrawn tissue with the overlapping lips alternating as to which of the lips is more forwardly disposed.

The overlapping portions 43 of the overlapping lips 40, 41 contact opposing faces of the tissue being withdrawn through the dispensing opening 11 at opposing lateral portions of the elongate tissue as it is being withdrawn in a longitudinal direction of the tissue. This contact of opposing faces of the tissue being withdrawn by the overlapping portions 43 of the overlapping lips 40, 41 is a pinching type contact on opposing faces of the tissue. In the non-overlapping portion 44 of the lips 40, 41, the tissue being withdrawn may be contacted by one or the other of the lips 40, 41, but the contact is not so as to pinch the tissue as it is being withdrawn. Pinching of opposing lateral portions of an elongate tissue as it is being withdrawn, with a central lateral portion between the opposing lateral portions of the tissue not being pinched, tends to avoid crumpling of the tissue in a lateral direction during dispensing.

The above description of the overlapping lips 40, 41 has been given in the context of a package 1 as described previously with respect to the arrangements of Figs. 1 and 2. Such a package 1 is disposable and is thus made of less hardwearing materials such as a thin polymer wrap, paper or cardboard. In an alternative arrangement, the , overlapping lips could be applied on either side of a more hardwearing container for a stack of tissues. Such a container could be wall mountable and made of suitably rigid polymers or metal. The overlapping lips 40, 41 would be arranged on opposing lateral sides of an elongate dispensing opening for such a container. The lips would be attached to the container on either side of the dispensing opening and extend across the dispensing opening in a cantilevered manner so as to partially overlap such that a line normal to a plane of the dispensing opening would pass through both lips where they overlap. The lips would be shaped and function as described above with respect to Figs. 4a - 4c. For a container having a fixed dispensing opening, the description of the overlapping lips 40, 41 with respect to the closed configuration of the package 1 may not be applicable. With a fixed dispensing opening 11, that is a dispensing opening 11 that is not formed by opposing parts of a container or package that move away from one another, the overlapping lips would not move from a more overlapping configuration as shown in Fig. 4a to a less overlapping, but still overlapping configuration, as shown in Fig. 4b.

In one aspect of the present disclosure, the package 1 comprising a stack of tissues 10 according to an embodiment of the present invention also comprises a cover 50 for covering the stack of tissues 10 in a thickness or stacking direction of the stack of tissues 10 when the package 1 is in the opened configuration, as shown in Fig 5. The stack of tissues 10 has opposing major faces provided at least in part by a first and last tissue in a stacking sequence of the stack of tissues 10. The package 1 opens at the dispensing opening 11 so as to reveal the major face of the stack of tissues 10 corresponding to the first tissue in the stack 10. A hinge 9 of the package 1 is provided across, in a lateral direction, of an opposing major face of the stack of tissues 10 so that the package 1 opens about the hinge 9 to provide the dispensing opening 11. Connecting the hinge 9 and the dispensing opening 11 are opposing front end rear face walls 6, 7 of the package 1 that also open about the hinge 9 so as to reveal the stack of tissues 10 in a thickness direction of the stack of tissues 10.

The opening in the back and front face walls 6, 7 of the package 1 is greater in extent toward the dispensing opening 11 from the hinge 9 when the package 9 is in the opened configuration. The opening is between opposing parts or, in the shown arrangements, halves 51, 52 of the front and back face walls 6, 7 when the package 1 is in the opened configuration. The cover 50 is attached to one of the parts 51, 52 on a front face 7 of the package 1 and extends across the opening between the opposing parts 51, 52 of the front face 7 to the other part 51, 52 to protect the stack of tissues 10 from contamination, such as by dust. The cover 50 is attached to one of the parts 51, 52, yet is unattached to the other part 51, 52 of the front face 7 when the package 1 is in the opened configuration so that it moves with one of the parts 51, 52 and is slidable with respect to the other part 51, 52. The cover 50 is attached to one of the parts on the inside of the package 1. In the closed configuration of the package 1, before the perforation line 8 is broken, the cover 50 is covered by the package 1 so that the cover 50 is inside the package 1.

The cover 50 is triangular in shape so that a peak of the triangle is positioned at the hinge 9 side of the opening between the opposing parts 51, 52 of the front face 7 when the package 1 is in the opened configuration and a base of the triangle defined by the cover 50 is disposed at a dispensing opening 11 side of the front face 7. In this way, the shape of the cover 50 conforms to the shape of the opening between the opposing parts 51, 52 of the package 1 when the package 1 is in the opened configuration. The cover 50 thus provides an effective dust cover for the full extent of the stack of tissues 10 that would otherwise be revealed in the stacking direction when the package 1 is in the opened configuration.

In use, the package 1 is grasped at opposing longitudinal ends thereof with the fingers on a bottom face wall 3 of the package 1 thumbs on a top face wall 2 of the package 1 and palms contacting opposing longitudinal end face walls 4, 5 of the package 1, as shown by the hands 54 in Fig. 5. The thumbs are pushed into the top face of the package 1, while the fingers of the hand 54 are moved apart so as to break a line of perforation 8 to provide a dispensing opening 11 in the bottom face wall 3 of the package 1, a hinge 9 in the top face wall 2 of the package 1 and front and rear openings in the package 1 that connect the hinge 9 and the dispensing opening 11. Parts 51, 52 of the package 1 move apart from one another as the package 1 is opened about the hinge 9. The cover 50 moves with the part 51, 52 of the package 1 that it is attached to and slides relative to the other part 51, 52. The cover 50 provides a dust cover when the package 1 is in the opened configuration covering the stack of tissues 10 in the stacking direction of the tissues.

The cover 50 is preferably transparent so that a user can view through it to determine a level of depletion, which is determined by the number of tissues left in the stack 10, of the package 1. The cover 50 may be made of a polymer film.

In a modification of the package 1 shown in Fig. 5, a cover 50 could be provided on opposing faces of the package 1, where those faces extend in the stacking direction of the stack of tissues 10. Thus, in the shown arrangement of Fig. 5, a cover 50 would be provided that covers an opening between opposing parts 51, 52 of the package 1 in the rear face wall 6 and the front face wall 7 of the package 1.

In another modification of the arrangement shown in Fig. 5, the cover 50 could be attached on an outside of the package 1. Aesthetically this modification may not be as desirable as that shown in Fig. 5, where the cover 50 cannot be viewed until the package 1 is opened.

The package 1 of Fig. 5 has been described above with respect to top, bottom, back and front face walls 2, 3, 6, 7 of the package 1. The cover 50 could, however, be provided for other types of package 1 than that shown in Fig. 5. Thus, any package that opens in three faces about a hinge provided in the fourth face of the package 1 to reveal tissues in the three faces could desirably include a cover for one, two or three of the faces to provide dust protection for the tissue of the package. Such a cover is attached on a part of the package 1 on one side of the opening and is slidable with respect to a part of the package on the other side of the opening and preferably is attached on an inside of the package so that the package covers the cover when the package is in a closed configuration. Preferably, the dispensing opening revealed by a face of the package opposing the hinge face is not covered or is only partially covered by the cover so that a user is not hindered from grasping the underlying tissues through the dispensing opening. More preferably, the cover is disposed with respect to, preferably only with respect to, covering one qr both of the faces of the stack that extend between a hinge face of the package and a dispensing opening.

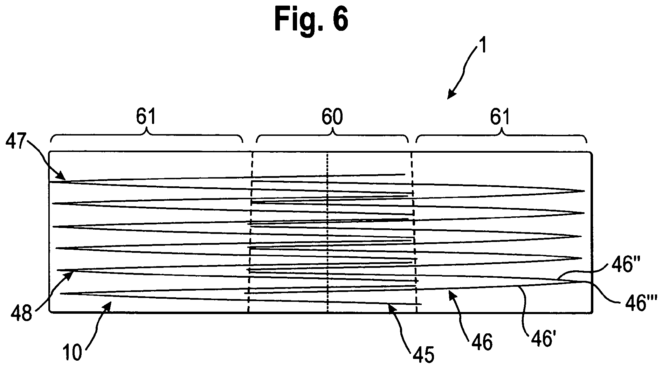

Referring to Fig. 6, an interfolding pattern for the stack of tissues 10 according to an embodiment of the present invention in the package 1 can be seen. The stack of tissues 10 comprises a first tissue 45, a second tissue 46 and a sequence of further tissues until the last tissue 47 that are interfolded to form the stack of tissues 10. For any given tissue in the stack 10 (except for the first and last tissues 45, 47 in the tissue withdrawal sequence of the stack 10), the given tissue 46 is folded so as to provide a leading panel 46' and a trailing panel 46" connected by a fold 46"'. The given tissue 46 is elongate and the fold 46'" extends laterally across the given tissue 46. The leading panel 46' is in partial face-to-face relation (along a partial longitudinal extent of the leading panel in the longitudinal direction of the tissue 46) with a trailing panel of a previous tissue 45 in the tissue withdrawal sequence of the stack 10. Further, a trailing panel of the given tissue 46 is in partial overlapping face-to-face relation with a leading panel of a next tissue in the tissue withdrawal tissue. In this way, as the tissue 45 previous to the given tissue 46 is withdrawn, the tissue 46 travels with it in the tissue withdrawal direction as a result of a trailing panel of the previous tissue 45 being in face-to-face overlapping relation with a leading panel of the given tissue 46. Likewise as the given tissue 46 is withdrawn, the next tissue 48 travels with it as a result of a leading panel of the next tissue being in face-to-face overlapping relation with a trailing panel of the given tissue 46.

Referring to Fig. 6, the leading panel 46' of the given tissue 46 overlaps with a trailing panel of the previous tissue 45 in the tissue withdrawal sequence to a partial extent along a longitudinal axis of the given tissue 46. Likewise, a trailing panel 46" of the given tissue 46 overlaps partially with a leading panel of the next tissue 48 in the tissue withdrawal sequence to a partial extent along a longitudinal axis of the given tissue 46. There is thus provided an elongate stack 10 having a central portion 60 between opposed longitudinal end portions 61 where the leading and trailing panels of the tissues in the stack 10 overlap with one another in face-to-face relation. At the opposed longitudinal ends 61 of the stack 10, adjacent tissues in the stack 10 do not overlap with one another. Thus, for the given tissue 46, there is a leading panel 46' overlapping with a trailing panel of a previous tissue 45 in the tissue withdrawal sequence along a first portion of the leading panel 46'. Likewise, the trailing panel 46" overlaps in face-to-face relation with a leading panel of a next tissue 48 in the tissue withdrawal sequence of the stack 10 along a second partial extent of the trailing panel 46" in a longitudinal direction of the tissue 46. There is thus first and second longitudinal portions of the given tissue 46, which are separated by the fold 46'" that do not overlap with adjacent tissues in the tissue withdrawal sequence that. The overlapping portions of the tissues in the stack 10 correspond to the overlapping portion 60 of the stack, while the non-overlapping portions of the tissues in the stack 10 correspond to the non-overlapping portions of the stack 10 at opposed longitudinal ends 61 of the stack 10.

In a longitudinal direction of the elongate stack 10, a ratio of a longitudinal extent of the overlapping portion 60 to a longitudinal extent of the stack 10 is about 30%.

The overlapping region 60 of the slack 10 is a central region between opposed longitudinal portions 61 of the elongate stack 10. The package 1 is configured so that a dispensing opening 11, and the perforation line 8 that has to be broken to create the dispensing opening, is disposed in the central region of the stack 10. The weight of the stack 10 is thus centrally biased in the overlapping region 61 so that the overlapping region 60 weighs more than either of opposed non-overlapping longitudinal end portions 61 of the stack 10 when a longitudinal axis of the stack 10 is aligned horizontally.

In use, with respect to any given tissue 46 in the stack 10, as the previous tissue in the tissue stacking sequence 45 is withdrawn through the dispensing opening 11 (as described previously) of the package 1, the slack provided by the longitudinal extent of the next tissue 45 that does not overlap with the second tissue 46 is taken up. Once the slack is taken up, and the next tissue 45 is withdrawn through the dispensing opening 11 to a major longitudinal extent of the tissue 45, tension along the tissue withdrawal direction of the next tissue 45 is transferred to the given tissue 46 by way of the face-to-face interaction between a portion of the trailing panel of the next tissue 45 and a portion of the leading panel 46' of the given tissue 46. Once the tissue 45 is withdrawn through the dispensing opening so that the full longitudinal extent of the overlapping portion of the leading panel of the given tissue 46 protrudes through the dispensing opening 11, the next tissue 45 is released from the given tissue 46 and is dispensed from the stack 10 and the package 1. The given tissue 46 that protrudes through the dispensing opening 11 may then be grasped by a user for dispensing. The slack in the given tissue 46 where it is not in overlapping face-to-face relation with the next tissue 48 in the tissue withdrawing sequence can be taken up until it reaches an overlapping portion between a face of the trailing panel 46" and a face of a portion of a leading panel of the next tissue 48. At this point, pulling on the given tissue 46 causes the next tissue 48 to travel with it because of the face-to-face interaction between the given tissue and the next tissue 48 at the overlapping portion thereof. This procedure is repeated in order to dispense any given tissue in the stack 10.

The stack of tissues 10 can be an independent aspect of the present invention. Thus, the stack 10 can be provided in an alternative type of container to the disposable package 1, such as one made of more hardwearing materials like metal or rigid plastics as in a wall mountable container. In such a wall mountable container, the container is preferably elongate so that its longitudinal axis coincides with a longitudinal axis of the stack 10. Further, a dispensing opening of the container is preferably longitudinally centrally positioned in the container and extends laterally across the container as with the package 1 described with respect to Fig. 6. The dispensing opening preferably extends laterally across the container from one face to an opposing face so as to present a dispensing opening of the container that is at least as laterally large, if not larger than, a lateral extent of the stack 10. This configuration means that the stack 10 will tend to bulge into the dispensing opening in the tissue withdrawal direction when the tissue withdrawal direction is aligned with gravity (that is, the longitudinal axis of the stack 10 and the container are aligned with the horizontal).

A ratio of an extent of a longitudinal extent of the overlapping region 60 of the stack 10 to a longitudinal extent of the stack 10 as a whole has been described above as being about 0.3. The ratio is, according to the present invention as outlined above in the summary section, 0.25 to 0.5.

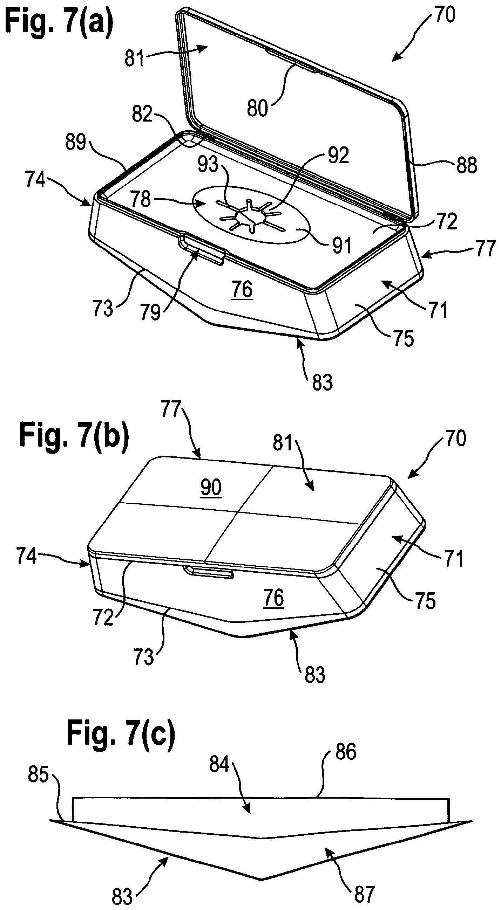

Fig. 7 discloses a preferred arrangement of a moist non-woven sheet dispenser 70. The moist non-woven sheet dispenser 70 is in an open configuration in Fig. 7a and is in a closed configuration in Fig. 7b. The moist non-woven sheet dispenser has a receptacle 71 for receiving a stack according to the present invention, which stack is of moist non-woven sheets. The receptacle has first and second opposed major faces, first and second opposed minor faces and first and second intermediate sized opposed faces. The major faces are provided by top and bottom wall faces 72, 73, the minor faces are provided by opposed end wall faces 74, 75 and the intermediate sized faces are provided opposed front and back faces 76, 77. The top wall face 72 is characterised by having a dispensing opening 78 in a central region thereof. The front face 76 is characterised by having a recess and catch 79 formed therein for receiving a tab 80 of a lid 81 therein in order to secure the lid in the closed configuration of Fig. 7b. The back face wall 77 is characterised by having a hinge member 82 extending therefrom so as to hingedly connect a lid 81 to the receptacle 71. The opposed end face walls 74, 75 and the opposed front and back face walls 76, 77 depend from the top face wall 72 and partially define a moist non-woven sheet receiving cavity of the receptacle 77. A bottom face of the receptacle 77, as defined by the end face walls 74, 75 and the front and back face walls 76, 77, is open so that tissues can be inserted into the receptacle 77 through its open bottom face 73.

The moist non-woven sheet dispenser has a bottom part 83 that is removably fittable in the open bottom face of the receptacle 71. The bottom part 83 is shown removed from the receptacle 71 in Fig. 7c and attached to the receptacle 71 in Figs. 7a and 7b. The bottom part 83 provides an upstanding platform 84 surrounded by a peripheral flange 85. The platform 84 is sized so as to be fittingly received by the inside of the opposed end walls 74, 75 and the front and back walls 76, 77. A top surface 86 of the platform 84 provides a base of the receptacle 71 upon which a stack of moist non-woven sheets can lay. Depending from the platform 84 of the bottom part 83 is a triangular prism shaped part 87, which defines a standing surface for the moist non-woven sheet dispenser 70.

The moist non-woven sheet dispenser 70 further comprises a lid 81 that is hingedly connected to the receptacle 71 by way of the hinge member 72. The lid 81 is movable by pivoting about the hinge member 82 between opened and closed configurations. The lid 81 defines about its periphery a depending flange that fits over and outside of an upstanding flange 89 extending about a periphery of the top surface 72 of the receptacle 77. The depending flange 88 of the lid 81 and the upstanding flange 89 extending about the periphery of the top surface 72 of the receptacle 71 sealingly engage with one another, with the depending flange 88 of the lid 81 being positioned peripherally outside the upstanding flange 89 of the receptacle 71. Referring to Fig. 7b, the top surface 90 of the moist non-woven sheet dispenser is smooth and continuous for easy wiping.

The dispensing opening 78 of the top surface 72 of the receptacle 71 is partially closed by an insert 91 that extends around the dispensing opening and has inwardly protruding flaps 92 separated by slits 93. The flaps are circumferentially distributed about a central hole through which the tissue passes in exiting the dispensing opening 78 and the insert 91.

To use, the lid 81 is grasped by a thumb inserted into the recess of the catch and recess 79 when the moist non-woven sheet dispenser 70 is in the closed configuration. The thumb thus pulls the lid 81 so as to rotate about the hinge member 82, which causes the tab 80 to deform away from a catch at the top of the catch and recess 79 to thereby release the lid 81 for movement into the opened configuration as shown in Fig. 7a. Opening the moist non-woven sheet dispenser 70 reveals the top surface 72 and a dispensing opening 78. A moist non-woven sheet can be withdrawn from the receptacle 77 through the dispensing opening 78 in the top surface 72 of the receptacle 71 and through the insert 91 that partially closes the dispensing opening 78. As a tissue is pulled through the insert 91, the flaps 92 deform in the tissue withdrawal direction, which serves to scrunch the moist non-woven sheet as it is being withdrawn, which may allow any excess moisture on the tissue to be squeezed off and kept inside the receptacle 71. After a tissue has been withdrawn, the lid 81 can be closed again so that the tab 80 is deformed outwardly to allow it to pass over a catch and then resiliently reforms inwardly so as to be received in the recess of the catch and recess 79. In the closed configuration, the depending peripheral flange 88 of the lid 81 sealingly mates with an upstanding peripheral flange 89 of the receptacle 71. These flanges may be at least partly formed of a resilient or rubber-like material in order to improve the sealing capabilities. Likewise, the insert 91 can be made of a rubber-like material to allow the flaps 92 to resiliently reform and also for sealing the dispensing opening 78.

When a replacement stack of moist non-woven sheets is to be inserted in the receptacle 71 of the moist non-woven sheet dispenser 70, the bottom part 83 is removed so that the platform 84 comes out of engagement with the front, back and end face walls 76, 77, 74 and 75 of the receptacle 71. The receptacle 71 can then be turned over so that the cavity defined by the walls of the receptacles 71 faces upwards. A stack of moist non-woven sheets can then be inserted into the cavity defined by the receptacle 71 and the bottom part 83 can be inserted so that it sealingly mates with the front, back and end face walls 76, 77, 74 and 75 of the receptacle 71. A top face 86 of the platform 84 is thus in face-to-face relation with a bottom tissue of the stack of moist non-woven sheets inserted in the receptacle 71. The moist non-woven sheet dispenser 70 can then be turned back around so that the lid 81 and the dispensing opening 78 is faced upwards. In inserting the bottom part 83, the platform 84 may be slightly compressed by the walls of the receptacle 71 as it is inserted so as to ensure a fast engagement between the bottom part 83 and the walls of the receptacle 71, which is also a sealing engagement. Thus, the bottom part 83 is made of a resilient material. The bottom part 83 may be made of a rubber or rubber-like material.

In the closed configuration shown in Fig. 7b, the moist non-woven sheet dispenser 70 is substantially sealed and thus prevents escape of moisture from the dispenser 70. The sealingly mating flanges 88, 89 of the lid 81 and receptacle 71, respectively, prevent any moisture from escaping along a path through the dispensing opening 78, in a gap between the lid 81 and the receptacle and the top surface 72 of the receptacle 71 and thus out of the moist non-woven sheet dispenser 70. Further, the sealing engagement between the bottom part 83 and the depending walls 74, 75, 76 and 77 of the receptacle 71 prevents any moisture from escaping from the open bottom face of the receptacle 71.

In the shown arrangement, the bottom part 83 provides a standing surface of the moist non-woven sheet dispenser 70 that is not flat relative to the lid 90. Instead, it defines depending sloped surfaces that meet at a central point. Such bottom surfaces have a function that will become clear in the following. The moist non-woven sheet dispenser 70 could be made so as to have a flat bottom surface in order to allow it to stand on a counter top so that the plane of the top surface 72 and the plane of the lid 90 presents a substantially flat surface (relative to the counter top) that faces upwardly to a user.

The insert 91 is provided in the form of a flap 92 and slit 93 structure where the flaps define a circumference of a central opening through which moist non-woven sheet can be withdrawn. Other types of resilient inserts 91 are known in the art. The insert 91 could be modified so as to define just one slit, which could be straight or wavelike. Similarly, the closing mechanism, which is a tab 80 and catch and recess structure in the shown embodiment, could be any known type of closure mechanism. For example, the receptacle 71 could define a protruding tab in a front face 76 and the lid 81 could have a mating lip that can be resiliently deformed outwardly to pass over the tab and when released resiliently reforms so that the lip catches onto the tab to thereby secure the moist non-woven sheet dispenser 70 in the closed configuration.

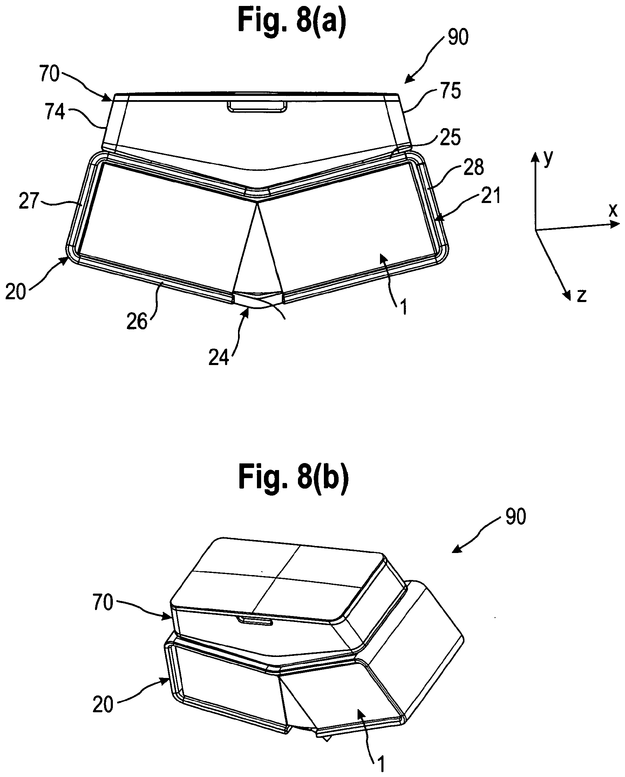

Fig. 8 discloses a moist and dry tissue dispensing system 90 comprising a dry tissue dispenser 20 and a moist non-woven sheet dispenser 70. The dry tissue dispenser is as described above with respect to Fig. 2. The moist non-woven sheet dispenser 70 is as described above with respect to Fig. 7. The moist non-woven sheet dispenser 70 carries, in the receptacle 71 thereof, a stack according to the present invention, which stack is of moist non-woven sheet. The dry tissue dispenser 20 carries a package 1 comprising a stack according to the present invention, which stack is of dry tissues 10. The dry tissue dispenser 20 is adapted to be mounted to a room wall by way of a back plate 22. The peripheral wall extending from the rear plate 22 in a direction of a normal to the plane defined by the rear plate 22 has a bottom face part 26 and a top face part 25. The bottom face part 26 is characterised by having a dispensing opening 24 through which a dispensing opening 11 of the package 1 can be accessed so that dry tissues in the package 1 can be withdrawn. The top face part 25 of the dry tissue dispenser 20 defines a depending V-shape in an outer surface thereof. The moist non-woven sheet dispenser 70 has the bottom part 83 that also defines a V-shaped recess as a bottom outer surface. The V-shape of the bottom part 83 of the moist non-woven sheet dispenser 70 and the top part 75 of the dry tissue dispenser 20 substantially fit with one another so that the moist non-woven sheet dispenser 70 is securely received by the dry tissue dispenser 20. The moist non woven sheet dispenser 70 sits atop the dry tissue dispenser 20 and they have cooperating interfacing surfaces, which prevent relative movement of the moist non-woven sheet dispenser 70 along an axis extending between opposing end face walls 27, 28 of the dry tissue dispenser and end face walls 74, 75 of the moist non-woven sheet dispenser.

In use, the dry tissue dispenser is mounted to a room wall so that the rear plate 22 is mounted against the room wall. A normal direction to the room wall and to the rear plate 22 can be defined as a Z direction. The moist non-woven sheet dispenser 70 can then be placed on top of the dry tissue dispenser 20 so as to provide a moist and dry tissue dispensing system 90. A package of dry tissues 1 is inserted through an open front face of the dry tissue dispenser 20, as described previously with respect to Fig. 2. The lid 81 of the moist non-woven sheet dispenser 70 can be opened as shown in Fig. 7a so as to reveal the dispensing opening 78. A user can withdraw tissue from the dispensing opening 78 of the moist non-woven sheet dispenser 70 and can withdraw dry tissue through the dispensing opening 11 of the package 1 and the dispensing opening 24 of the dry tissue dispenser 20, as needed. The moist and dry tissues are dispensed in opposing tissue withdrawal directions, which can be considered to lie along a Y-axis perpendicular to the Z-axis. An X-axis can also be defined that is perpendicular to the Y axis and the Z-axis and extends in a direction between opposing end face walls 27, 28 of the dry tissue dispenser 20 and between opposing end face walls 74, 75 of the moist non-woven sheet dispenser 70. The depending sloped surfaces at the bottom of the moist non-woven sheet dispenser and the depending slopes surfaces of the top surface of the dry tissue dispenser 20 matingly interact so that the sloped surfaces of the dry tissue dispenser 20 resist movement of the moist non-woven sheet dispenser 70 in the X-direction.

The dry tissue dispenser 20 can be easily refilled by replacing the package 1 therein with a fresh package through an open front face of the dry tissue dispenser 20. The moist non-woven sheet dispenser can be easily refilled by tipping it up and removing the bottom part 83 from the receptacle 71 and inserting a new stack of moist non-woven sheets in the open face presented by the upturned receptacle 71 of the moist non-woven sheet dispenser 70. The bottom part 83 can then be replaced and the moist non-woven sheet dispenser 70 repositioned back on top of the dry tissue dispenser 20. The depending nature of the bottom part 83 means that the moist non-woven sheet dispenser 70 has a centre of gravity positioned within the bottom part 83 and preferably also within an X-directional line connecting opposing sloping surfaces of the top part 25 of the dry tissue dispenser 20. This provides a particularly stable configuration for the moist non-woven sheet dispenser 70 which preferably allows a user to withdraw moist non-woven sheets from the moist non-woven sheet dispenser 70 using only one hand. That is, the moist non-woven sheet dispenser 70 is not required to be stabilised with one hand so that moist non-woven sheets can be withdrawn from the moist non-woven sheet dispenser 70 with the other hand.

In a modification of the dry tissue dispenser 20 shown in Figs. 8a and 8b, there may also be provided front and back upstanding flanges that contact front and back faces 76, 77 of the moist non-woven sheet dispenser 70 so as to resist movement of the moist non-woven sheet dispenser 70 in the Z-direction when tissue is being withdrawn from the moist non-woven sheet dispenser 70. Similarly, upstanding flanges can be positioned at opposed end plates 27, 28 of the dry tissue dispenser so as to contact end faces 74, 75 of the moist non-woven sheet dispenser. Preferably, upstanding flanges extend about a periphery of a top face part 25 of the dry tissue dispenser 20, which will thus surround front, back and end face walls 76, 77, 74 and 75 of the moist non-woven sheet dispenser to keep the moist non-woven sheet dispenser 70 in position in the X and Z directions when tissue is being dispensed from the moist non-woven sheet dispenser 70. As with the cooperating interfacing surfaces shown in Fig. 8a and 8b, such upstanding flanges do not hinder movement of the moist non-woven sheet dispenser 70 in the Y direction for when the moist non-woven sheet dispenser 70 has to be refilled.

The moist non-woven sheet dispenser 70 may have a bottom surface that does not define a depending v-shape such as a flat surface. It may be provided with means for securing it to a room surface such as a counter top. The means could be suction cup means, for example. In this case, the cooperating interfacing surfaces between the moist and dry dispensers 20, 70 are not necessarily required, although they are preferred. Alternatively, there could be a magnetic interaction to secure the moist and dry dispensers 20, 70 together. These alternative securement means (magnetic/suction cup/otherwise) do not have the aesthetic advantage of the male/female interfitting bottom and top surfaces of the moist and dry sheet dispensers 20, 70 of the system 90 of Fig. 8.

The dry tissue paper of all aspects of the present disclosure is preferably toilet paper, which is characteristic over other kinds of hygiene tissue paper, such as facial tissue paper, as known by the skilled person. It may be embossed, and it may be single-ply or multiply. One characteristic feature of braided paper as compared to other types of hygiene or absorbent paper is its dissolvability. Toilet paper has a characteristic bowl or shortly after flushing. Other types of tissue paper include wet strength agents to reduce their water dissolvability.

In a preferred arrangement, the feature described above relating to the breakable package of Fig. 1, the dispenser of Fig. 1, the overlapping lips of the package of Fig. 5, the interfolding arrangement of Fig. 6 and the moist non-woven sheet dispenser of Fig. 7 are combined in a system as shown in Fig. 8.

## Claims

1. A stack of interfolded tissue paper sheets (10), wherein the interfolding pattern is such that each sheet is folded once to provide leading and trailing panels (46', 46") with respect to a sheet withdrawal direction, which is a direction normal to the plane of the sheets in the stack, the interfolding pattern is such that for any given sheet (46) in the stack, a trailing panel of an adjacent sheet (48) subsequent in the stack in a sheet withdrawal sequence is in face to face, overlapping relation with a leading panel of the given sheet and a leading panel of an adjacent sheet (45) preceding in the stack in the sheet withdrawal sequence is in face to face, overlapping relation with the trailing panel of the given sheet, wherein the overlap of the given sheet with the trailing panel of the subsequent sheet and the leading panel of the preceding sheet is a partial overlap to provide an overlapping region (60) of the given sheet where the leading and trailing panels of the given sheet overlap with the leading panel of the preceding sheet and the trailing panel of the subsequent sheet and a non-overlapping region (61) of the given sheet wherein the leading and trailing panels of the sheet extend beyond the overlapping faces to a fold portion (46"') of the given tissue, thereby to define a stack comprising an overlapping region where adjacent sheets in the stack overlap and non-overlapping regions (61) of the stack on opposed sides of the overlapping region and at opposed longitudinal ends of the stack (10) wherein adjacent sheets of the stack do not overlap,
wherein the overlapping (60) and non-overlapping (61) regions of the stack (10) make the stack (10) elongate in a first direction of the stack (10) from the non-overlapping region (61) to the overlapping region (60) and to the non-overlapping region (61), wherein the first direction is perpendicular to the sheet withdrawal direction, and wherein a ratio of length of the overlapping region (60) of the stack in the first direction to a length of the stack in the first direction is in the range of 0.25 to 0.50.

2. The stack of claim 1, wherein the weight of the stack (10) is concentrated in the overlapping region (60).

3. The stack of any one of the preceding claims, wherein adjacent panels of any given sheet in the stack is connected by a fold line (46"') and, optionally, the fold line is constituted by a line of weakness such as a line of perforations.

4. The stack of any preceding claim, wherein the tissue is dry tissue.

5. A container (1) comprising the stack of sheets as defined in any one of the preceding claims, wherein the container includes a dispensing opening (11) through which sheets (46, 47, 48) can be withdrawn from the stack and dispensed from the container.

6. The container of claim 5, wherein the dispensing opening is substantially the same width or greater than a width of the sheets (46, 47, 48), with respect to a direction along the face of the sheets (46, 47, 48) perpendicular to the sheet withdrawal direction, such that as a sheet is pulled out from the stack (10) through the dispensing opening, opposing sides edges, in the width direction, of the sheet are able to maintain their lateral spacing.

7. The container of claim 5 or 6, wherein the dispensing opening and the stack (10) are oriented such that the sheet withdrawal direction is aligned with the length of the sheets (46, 47, 48) as the sheets (46, 47, 48) are withdrawn from the stack (10) through the dispensing opening in,the sheet withdrawal direction.

8. The container of any one of claims 5 to 7, comprising overlapping lips in a sheet withdrawal direction so that as a sheet is withdrawn from the stack (10) through the dispensing opening, the lips are moved by the sheet from an overlapping state to a less or non-overlapping state to allow the sheet to pass, the lips configured to return to the overlapping state after the sheet is withdrawn.

9. The container of claim 8, wherein in the sheet withdrawal direction, the overlapping region (60) of the stack lays over the dispensing opening and the overlapping lips that with the container suitably oriented, the weight of the overlapping region (60) of the stack is at least partly borne by the overlapping lips.

## Patentansprüche

1. Stapel zusammengefalteter Tissue-Papierblätter (10), wobei das Zusammenfaltmuster derart beschaffen ist, dass jedes Blatt einmal gefaltet ist, um eine führende und nachlaufende Tafel (46', 46") in Bezug auf eine Blattentnahmerichtung bereitzustellen, die eine zu der Ebene der Blätter in dem Stapel senkrechte Richtung ist, wobei das Zusammenfaltmuster so beschaffen ist, dass für jedes gegebene Blatt (46) in dem Stapel eine nachlaufende Tafel eines benachbarten Blattes (48), das in dem Stapel in einer Blattentnahmesequenz folgt, sich in einer Fläche an Fläche, überlappenden Beziehung mit einer führenden Tafel des gegebenen Blattes befindet und eine führende Tafel eines angrenzenden Blattes (45), das in dem Stapel in der Blattentnahmesequenz vorhergehend ist, sich in einer Fläche an Fläche, überlappenden Beziehung mit der nachlaufenden Tafel des gegebenen Blattes befindet, wobei die Überlappung des gegebenen Blattes mit der nachlaufenden Tafel des folgenden Blattes und der führenden Tafel des vorhergehenden Blattes eine teilweise Überlappung ist, um einen überlappenden Bereich (60) des gegebenen Blattes bereitzustellen, wo die führende und nachlaufende Tafel des gegebenen Blatts mit der führenden Tafel des vorhergehenden Blattes und der nachlaufenden Tafel des folgenden Blattes überlappen, sowie einen nicht überlappenden Bereich (61) des gegebenen Blatts, wobei sich die führende und nachlaufende Tafel des Blattes über die überlappenden Flächen zu einem Faltbereich (46"') des gegebenen Tissues erstrecken, wodurch ein Stapel definiert wird, der einen überlappenden Bereich, wo angrenzende Blätter in dem Stapel überlappen, sowie nicht überlappende Bereiche (61) des Stapels an gegenüberliegenden Seiten des überlappenden Bereichs und an gegenüberliegenden Enden in Längsrichtung des Stapels (10), wobei benachbarte Blätter des Stapels nicht überlappen, aufweist,
wobei die überlappenden (60) und nicht überlappenden (61) Bereiche des Stapels (10) den Stapel (10) in einer ersten Richtung des Stapels (10) von dem nicht überlappenden Bereich (61) zu dem überlappenden Bereich (60) und zu dem nicht überlappenden Bereich (61) verlängern, wobei die erste Richtung senkrecht zu der Blattentnahmerichtung ist, und wobei ein Verhältnis der Länge des überlappenden Bereichs (60) des Stapels in der ersten Richtung zu einer Länge des Stapels in der ersten Richtung im Bereich von 0,25 bis 0,50 liegt.

2. Stapel nach Anspruch 1, wobei das Gewicht des Stapels (10) in dem überlappenden Bereich (60) konzentriert ist.

3. Stapel nach einem der vorhergehenden Ansprüche, wobei benachbarte Tafeln eines jeden gegebenen Blattes in dem Stapel durch eine Faltlinie (46"') verbunden sind und wahlweise die Faltlinie durch eine Schwächungslinie, wie etwa eine Perforationslinie, gebildet ist.

4. Stapel nach einem vorhergehenden Anspruch, wobei das Tissue ein trockenes Tissue ist.

5. Behälter (1), aufweisend den Stapel von Blättern nach einem der vorhergehenden Ansprüche, wobei der Behälter eine Spenderöffnung (11) enthält, durch die Blätter (46, 47, 48) aus dem Stapel entnommen und aus dem Behälter gespendet werden können.

6. Behälter nach Anspruch 5, wobei die Spenderöffnung im Wesentlichen von gleicher Breite wie oder größer als eine Breite der Blätter (46, 47, 48) in Bezug auf eine zu einer Bogenentnahmerichtung senkrechte Richtung entlang der Fläche der Blätter (46, 47, 48) ist, sodass, wenn ein Blatt aus dem Stapel (10) durch die Spenderöffnung herausgezogen wird, gegenüberliegende Seitenkanten in der Breitenrichtung des Blattes in der Lage sind, deren seitlichen Abstand beizubehalten.

7. Behälter nach Anspruch 5 oder 6, wobei die Spenderöffnung und der Stapel (10) so ausgerichtet sind, dass die Blattentnahmerichtung mit der Länge der Blätter (46, 47, 48) fluchtet, wenn die Blätter (46, 47, 48) aus dem Stapel (10) über die Spenderöffnung in der Blattentnahmerichtung entnommen werden.

8. Behälter nach Anspruch 5 bis 7, aufweisend überlappende Lippen in einer Blattentnahmerichtung, sodass wenn ein Blatt aus dem Stapel (10) über die Spenderöffnung entnommen wird, die Lippen durch das Blatt aus einem überlappenden Zustand in einen weniger oder nicht überlappenden Zustand bewegt werden, um dem Blatt einen Durchgang zu ermöglichen, wobei die Lippen ausgestaltet sind, in den überlappenden Zustand zurückzukehren, nachdem das Blatt entnommen wurde.

9. Behälter nach Anspruch 8, wobei in der Blattentnahmerichtung der überlappende Bereich (60) des Stapels über der Spenderöffnung und den überlappenden, mit dem Behälter in geeigneter Weise ausgerichteten Lippen liegt, wobei das Gewicht des überlappenden Bereichs (60) des Stapels zumindest teilweise von den überlappenden Lippen getragen wird.

## Revendications

1. Pile de feuilles en papier absorbant entrepliées (10), dans laquelle le motif d'entrepliage est tel que chaque feuille est pliée une fois pour fournir des panneaux avant et arrière (46', 46") par rapport à une direction de prélèvement de feuille, qui est une direction normale au plan des feuilles dans la pile, le motif d'entrepliage est tel que, pour toute feuille (46) donnée dans la pile, un panneau arrière d'une feuille adjacente (48) suivante dans la pile dans un ordre de prélèvement de feuille est dans une relation de chevauchement face à face avec un panneau avant de la feuille donnée et un panneau avant d'une feuille adjacente (45) précédente dans la pile dans l'ordre de prélèvement de feuille est dans une relation de chevauchement face à face avec le panneau arrière de la feuille donnée, dans laquelle le chevauchement de la feuille donnée avec le panneau arrière de la feuille suivante et le panneau avant de la feuille précédente est un chevauchement partiel pour fournir une région de chevauchement (60) de la feuille donnée dans laquelle les panneaux avant et arrière de la feuille donnée chevauchent le panneau avant de la feuille précédente et le panneau arrière de la feuille suivante et une région de non chevauchement (61) de la feuille donnée dans laquelle les panneaux avant et arrière de la feuille s'étendent au-delà des faces chevauchantes vers une partie de pliage (46"') du papier absorbant donné, permettant ainsi de définir une pile comprenant une région de chevauchement dans laquelle des feuilles adjacentes dans la pile se chevauchent et des régions de non chevauchement (61) de la pile sur des côtés opposés de la région de chevauchement et à des extrémités longitudinales opposées de la pile dans lesquelles des feuilles adjacentes de la pile ne se chevauchent pas,
dans laquelle les régions de chevauchement (60) et de non chevauchement (61) de la pile (10) font que la pile (10) s'allonge dans une première direction de la pile (10) de la région de non chevauchement (61) vers la région de chevauchement (60) et vers la région de non chevauchement (61), dans laquelle la première direction est perpendiculaire à la direction de prélèvement de feuille, et dans laquelle un rapport d'une longueur de la région de chevauchement (60) de la pile dans la première direction à une longueur de la pile dans la première direction se situe dans la plage de 0,25 à 0,50.

2. Pile selon la revendication 1, dans laquelle le poids de la pile (10) est concentré dans la région de chevauchement (60).

3. Pile selon l'une quelconque des revendications précédentes, dans laquelle des panneaux adjacents de n'importe quelle feuille donnée dans la pile sont reliés par une ligne de pliage (46"') et, facultativement, la ligne de pliage est constituée par une ligne de moindre résistance telle qu'une ligne de perforations.

4. Pile selon l'une quelconque des revendications précédentes, dans laquelle le papier absorbant est un papier absorbant sec.

5. Conteneur (1) comprenant la pile de feuilles selon l'une quelconque des revendications précédentes, dans lequel le conteneur comprend une ouverture de distribution (11) à travers laquelle des feuilles (46, 47, 48) peuvent être prélevées de la pile et distribuées à partir du conteneur.

6. Conteneur selon la revendication 5, dans lequel l'ouverture de distribution est sensiblement de même largeur ou plus grande qu'une largeur des feuilles (46, 47, 48), par rapport à une direction le long de la face des feuilles (46, 47, 48) perpendiculaire à la direction de prélèvement de feuille, de sorte que, lorsqu'une feuille est retirée de la pile (10) à travers l'ouverture de distribution, des bords latéraux opposés, dans la direction de la largeur, de la feuille peuvent conserver leur espacement latéral.

7. Conteneur selon la revendication 5 ou 6, dans lequel l'ouverture de distribution et la pile (10) sont orientées de sorte que la direction de prélèvement de feuille est alignée avec la longueur des feuilles (46, 47, 48) lorsque les feuilles (46, 47, 48) sont prélevées de la pile (10) à travers l'ouverture de distribution dans la direction de prélèvement de feuille.

8. Conteneur selon l'une quelconque des revendications 5 à 7, comprenant des lèvres chevauchantes dans une direction de prélèvement de feuille de sorte que, lorsqu'une feuille est prélevée de la pile (10) à travers l'ouverture de distribution, les lèvres sont déplacées par la feuille d'un état de chevauchement à un état de moindre ou de non chevauchement pour permettre à la feuille de passer, les lèvres étant configurées pour revenir à l'état de chevauchement après que la feuille ait été prélevée.

9. Conteneur selon la revendication 8, dans lequel, dans la direction de prélèvement de feuille, la région de chevauchement (60) de la pile repose sur l'ouverture de distribution et les lèvres chevauchantes de sorte que, avec le conteneur orienté convenablement, le poids de la région de chevauchement (60) de la pile est au moins en partie supporté par les lèvres chevauchantes.
